# EUROPEAN PATENT APPLICATION

(11) **EP 4 697 700 A1**
(43) Date of publication of application: **18.02.2026**
(21) Application number: 23932386.8
(22) Date of filing: 11.04.2023
(51) Int. Cl.: H04N 19/105, H04N 19/61

(54) **DECODING METHOD, ENCODING METHOD, DECODER, AND ENCODER**

(71) Applicant: GUANGDONG OPPO MOBILE TELECOMMUNICATIONS CORP., LTD., Dongguan, Guangdong 523860 (CN)
(72) Inventor: XU, Luhang, Dongguan, Guangdong 523860 (CN)
(74) Representative: RGTH
(86) International application number: PCT/CN2023/087470
(87) International publication number: WO 2024/212086

(57) **Abstract**

Embodiments of the present application provide a decoding method, an encoding method, a decoder, and an encoder. The decoding method comprises: determining a maximum line number of reference lines allowed to be used by a current block; on the basis of the maximum line number, determining whether the current block uses a template-based multiple reference line (TMRL) mode; if the current block uses the TMRL mode, determining a reference line used by the current block and a prediction mode used by the current block; on the basis of the reference line used by the current block, predicting the current block using the prediction mode used by the current block, to obtain a prediction block. In the present embodiment, when determining whether to use the TMRL mode to predict the current block, the maximum line quantity must be used as a condition to determine whether the current block uses the TMRL mode, so that when the current block uses the TMRL mode, and the maximum line quantity can meet a use condition, decoding performance can be improved.

## Description

### TECHNICAL FIELD

Embodiments of this application relate to the field of coding technologies, and more specifically, to a decoding method, an encoding method, a decoder, and an encoder.

### BACKGROUND

Digital video compression technologies primarily compress huge amounts of digital image and video data, to facilitate efficient transmission and storage. With proliferation of Internet videos and increasingly high requirements on video definition, although existing digital video compression standards can implement video decompression, better digital video decompression technologies still need to be developed to reduce bandwidth and traffic pressure of digital video transmission, so as to improve decoding performance of a decoder.

### SUMMARY

Embodiments of this application provide a decoding method, an encoding method, a decoder, and an encoder, to improve decoding performance of the decoder.

According to a first aspect, an embodiment of this application provides a decoding method, including:
determining a maximum line quantity of reference lines allowed to be used by a current block;
determining, based on the maximum line quantity, whether the current block uses a template-based multiple reference line TMRL mode;
if the current block uses the TMRL mode, determining a reference line used by the current block and a prediction mode used by the current block; and
performing prediction on the current block based on the reference line used by the current block and by using the prediction mode used by the current block, to obtain a prediction block.

According to a second aspect, an embodiment of this application provides an encoding method, including:
determining a maximum line quantity of reference lines allowed to be used by a current block; and
encoding the maximum line quantity.

According to a third aspect, an embodiment of this application provides a decoder, including:
a first determining unit, configured to determine a maximum line quantity of reference lines allowed to be used by a current block;
a second determining unit, configured to determine, based on the maximum line quantity, whether the current block uses a template-based multiple reference line TMRL mode;
a third determining unit, configured to: if the current block uses the TMRL mode, determine a reference line used by the current block and a prediction mode used by the current block; and
a prediction unit, configured to perform prediction on the current block based on the reference line used by the current block and by using the prediction mode used by the current block, to obtain a prediction block.

According to a fourth aspect, an embodiment of this application provides an encoder, including:
a determining unit, configured to determine a maximum line quantity of reference lines allowed to be used by a current block; and
an encoding unit, configured to encode the maximum line quantity.

According to a fifth aspect, an embodiment of this application provides a decoder, including:
a processor, adapted to implement computer instructions; and
a computer-readable storage medium, where the computer-readable storage medium stores computer instructions, and the computer instructions are adapted to be loaded by the processor to execute the decoding method according to the first aspect or the implementations of the first aspect described above.

In an implementation, there are one or more processors, and there are one or more memories.

In an implementation, the computer-readable storage medium may be integrated with the processor, or the computer-readable storage medium is disposed separately from the processor.

According to a sixth aspect, an embodiment of this application provides an encoder, including:
a processor, adapted to implement computer instructions; and
a computer-readable storage medium, where the computer-readable storage medium stores computer instructions, and the computer instructions are adapted to be loaded by the processor to execute the encoding method according to the second aspect or the implementations of the second aspect described above.

In an implementation, there are one or more processors, and there are one or more memories.

In an implementation, the computer-readable storage medium may be integrated with the processor, or the computer-readable storage medium is disposed separately from the processor.

According to a seventh aspect, an embodiment of this application provides a computer-readable storage medium. The computer-readable storage medium stores computer instructions, and when the computer instructions are read and executed by a processor of a computer device, the computer device is enabled to perform the decoding method in the first aspect described above or the encoding method in the second aspect described above.

According to an eighth aspect, an embodiment of this application provides a computer program product or a computer program, where the computer program product or the computer program includes computer instructions, and the computer instructions are stored in a computer-readable storage medium. A processor of a computer device reads the computer instructions from the computer-readable storage medium, and the processor executes the computer instructions, so that the computer device executes the decoding method in the first aspect described above or the encoding method in the second aspect described above.

According to a ninth aspect, an embodiment of this application provides a bitstream, where the bitstream is a bitstream related to the method in the first aspect described above or a bitstream generated by the method in the second aspect described above.

Based on the foregoing technical solutions, when performing prediction on a current block, a decoder first determines a maximum line quantity of reference lines allowed to be used by the current block; then determines, based on the maximum line quantity, whether the current block uses a TMRL mode; if the current block uses the TMRL mode, determines a reference line used by the current block and a prediction mode used by the current block; and then, performs prediction on the current block based on the reference line used by the current block and by using the prediction mode used by the current block, to obtain a prediction block. That is, in predicting the current block, the decoder determines whether the current block uses the TMRL mode based on the maximum line quantity, so that the current block uses the TMRL mode when a condition for the maximum line quantity is satisfied, thereby improving decoding performance.

### BRIEF DESCRIPTION OF DRAWINGS

FIG. 1 is a schematic block diagram of an encoding framework according to an embodiment of this application.
FIG. 2 is a schematic block diagram of a decoding framework according to an embodiment of this application.
FIG. 3 shows an example of four reconstructed lines located around a current block according to an embodiment of this application.
FIG. 4 is an example of a template and reference lines located around a current block according to an embodiment of this application.
FIG. 5 is a schematic flowchart of a decoding method according to an embodiment of this application.
FIG. 6 is a schematic flowchart of an encoding method according to an embodiment of this application.
FIG. 7 is a schematic block diagram of a decoder according to an embodiment of this application.
FIG. 8 is a schematic block diagram of an encoder according to an embodiment of this application.
FIG. 9 is a schematic block diagram of an electronic device according to an embodiment of this application.

### DESCRIPTION OF EMBODIMENTS

The following describes the technical solutions in embodiments of this application with reference to the accompanying drawings.

The solutions provided in embodiments of this application may be applied to the technical field of digital video coding, for example, including but not limited to: the field of image encoding and decoding, the field of video encoding and decoding, the field of hardware video encoding and decoding, the field of dedicated circuit video encoding and decoding, and the field of real-time video encoding and decoding. In addition, the solutions provided in embodiments of this application may be combined with the Audio Video Coding Standard (Audio Video coding Standard, AVS), the second generation AVS standard (AVS2), or the third generation AVS standard (AVS3), for example, including, but not limited to: H.264/Audio video coding (Audio Video coding, AVC) standard, H.265/High Efficiency Video Coding (High Efficiency Video Coding, HEVC) standard, and H.266/Versatile Video Coding (Versatile Video Coding, VVC) standard. In addition, the solutions provided in embodiments of this application may be used to perform lossy compression (lossy compression) on images, or may be used to perform lossless compression (lossless compression) on images. The lossless compression may be visually lossless compression (visually lossless compression) or mathematically lossless compression (mathematically lossless compression).

The video encoding and decoding standards all use a block-based hybrid encoding framework.

Each frame in a video is partitioned into largest coding units (LCU: largest coding unit), or coding tree units (CTU: coding tree unit), which are square and have a same size (for example, 128 x 128 or 64 x 64). Each largest coding unit or coding tree unit may be partitioned into rectangular coding units (CU: coding unit) according to a rule. A coding unit may be further partitioned into a prediction unit (PU: prediction unit), a transform unit (TU: transform unit), and the like. The hybrid encoding framework includes a prediction (prediction) module, a transform (transform) module, a quantization (quantization) module, an entropy encoding (entropy coding) module, an in-loop filtering (in loop filter) module, and the like. The prediction module includes intra prediction (intra prediction) and inter prediction (inter prediction). Inter prediction includes motion estimation (motion estimation) and motion compensation (motion compensation). Due to a strong correlation between neighboring samples within a frame of a video, an intra prediction method is used in video coding technologies to eliminate spatial redundancy between neighboring samples. Intra prediction predicts samples information in a current block by referencing only information about a same frame of image. Due to strong similarity between neighboring frames in a video, time redundancy between neighboring frames is eliminated by using an inter prediction method in a video coding technology, thereby improving encoding efficiency. Inter prediction may reference image information from different frames, and search for motion vector information that best matches the current block by utilizing motion estimation. Transform is performed to convert a predicted image block into frequency domain, so that energy is redistributed. In combination with quantization, information insensitive to human eyes may be removed, thereby eliminating visual redundancy. Entropy encoding may eliminate character redundancy based on a current context model and probability information of a binary bitstream.

A basic process of video codec is as follows:
At an encoding end, one frame of image is divided into blocks. For a current block, intra prediction or inter prediction is used to generate a prediction block of the current block. The prediction block is subtracted from an original block of the current block, to obtain a residual block. The residual block is transformed and quantized, to obtain a quantization coefficient matrix. Then, the quantization coefficient matrix is entropy coded and output into a bitstream. At a decoding end, for the current block, intra prediction or inter prediction is used to generate a prediction block of the current block. A bitstream is parsed to obtain a quantization coefficient matrix, which is then dequantized and inversely transformed to obtain a residual block. The prediction block and the residual block are added together to obtain a reconstructed block. Reconstructed blocks form a reconstructed image, and the reconstructed image is subjected to in-loop filtering based on an image or block to obtain a decoded image. The encoding end needs to perform operations similar to those of the decoding side to obtain the decoded image. The decoded image may be used as a reference frame for subsequent frames in inter prediction. Block partitioning information, mode information such as prediction, transformation, quantization, entropy encoding, and in-loop filtering, or parameter information determined by the encoding end needs to be output to the bitstream if necessary. A decoding end determines, through parsing or analysis based on existing information, block partitioning information, mode information such as prediction, transformation, quantization, entropy coding, and in-loop filtering, or parameter information that is the same as the encoding end. This ensures that a decoded image obtained at the encoding end is the same as a decoded image obtained at the decoding end. The decoded image obtained at the encoding end is usually referred to as reconstructed image. During prediction, the current block may be partitioned into prediction units. During transformation, the current block may be partitioned into transform units. Partitioning of prediction units may be different from that of transform units. The basic process of a video codec under a block-based hybrid encoding framework is described above. With development of technologies, some modules or steps of the framework or process may be optimized, which is not specifically limited in this application.

The current block (current block) may be a current coding unit (CU), a current prediction unit (PU), or the like.

It should be noted that the encoding end needs to perform similar operations as the decoding end to obtain a decoded image. The decoded image may be used as a reference frame for subsequent frames in inter prediction. Block partitioning information, mode information such as prediction, transformation, quantization, entropy encoding, and in-loop filtering, or parameter information determined by the encoding end needs to be output to the bitstream if necessary. A decoding end determines, through parsing or analysis based on existing information, block partitioning information, mode information such as prediction, transformation, quantization, entropy coding, and in-loop filtering, or parameter information that is the same as the encoding end. This ensures that a decoded image obtained at the encoding end is the same as a decoded image obtained at the decoding end. The decoded image obtained at the encoding end is usually referred to as reconstructed image. During prediction, the current block may be partitioned into prediction units. During transformation, the current block may be partitioned into transform units. Partitioning of prediction units may be the same as or different from that of transform units. The basic process of a video codec under a block-based hybrid coding framework is described above. With development of technologies, some modules of the framework or some steps of the process may be optimized. This application is applicable to the basic process of the video codec under the block-based hybrid coding framework.

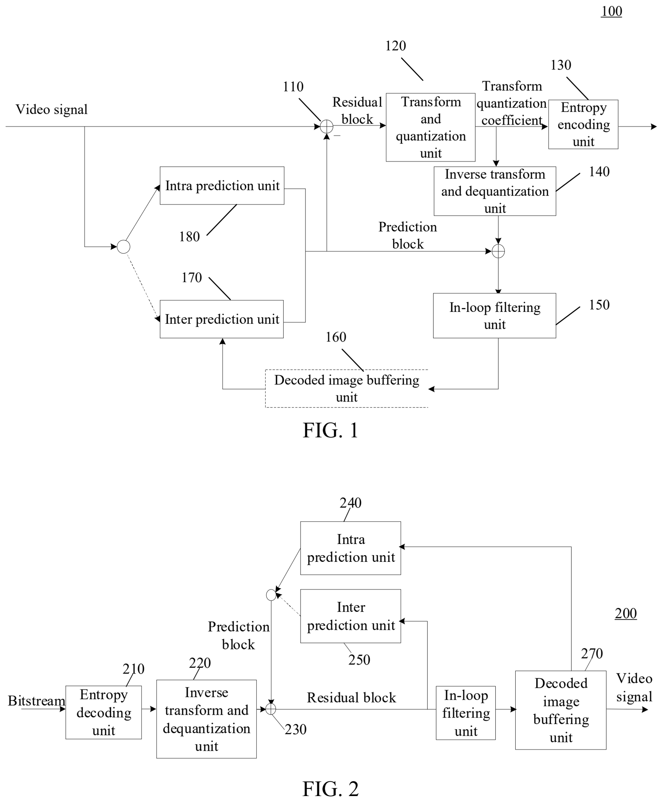

FIG. 1 is a schematic block diagram of an encoding framework 100 according to an embodiment of this application.

As shown in FIG. 1, the encoding framework 100 may include an intra prediction unit 180, an inter prediction unit 170, a residual unit 110, a transform and quantization unit 120, an entropy encoding unit 130, an inverse transform and dequantization unit 140, and an in-loop filtering unit 150. Optionally, the encoding framework 100 may further include a decoded image buffering unit 160. The encoding framework 100 may also be referred to as a hybrid framework encoding mode.

The intra prediction unit 180 or the inter prediction unit 170 may predict a to-be-encoded image block, to output a prediction block. The residual unit 110 may calculate a residual block, that is, a difference between the prediction block and the to-be-encoded image block, based on the prediction block and the to-be-encoded image block. The transform and quantization unit 120 is used to perform operations such as transform and quantization on the residual block, to remove information insensitive to human eyes, thereby eliminating visual redundancy. Optionally, a residual block not being subjected to transformation and quantization by the transform and quantization unit 120 may be referred to as a time-domain residual block, and a residual block being subjected to transformation and quantization by the transform and quantization unit 120 may be referred to as a frequency residual block or a frequency-domain residual block. After receiving a transform quantization coefficient output by the transform and quantization unit 120, the entropy encoding unit 130 may output a bitstream based on the transform quantization coefficient. For example, the entropy encoding unit 130 may eliminate character redundancy based on a target context model and probability information of a binary bitstream. For example, the entropy encoding unit 130 may be used to perform context-based adaptive binary arithmetic entropy coding (CABAC). The entropy encoding unit 130 may also be referred to as a header information encoding unit. Optionally, in this application, the to-be-encoded image block may also be referred to as an original image block or a target image block, and the prediction block may also be referred to as a prediction image block or an image prediction block, or may also be referred to as a prediction signal or prediction information. The reconstructed block may also be referred to as a reconstructed image block or an image reconstructed block, and may also be referred to as a reconstructed signal or reconstructed information. In addition, for the encoding end, the to-be-encoded image block may also be referred to as an encoding block or an encoding image block, and for the decoding end, the to-be-encoded image block may also be referred to as a decoded block or a decoded image block. The to-be-encoded image block may be a CTU or a CU.

The encoding framework 100 calculates a residual between the prediction block and the to-be-encoded image block to obtain a residual block, performs processing such as transformation and quantization on the residual block, and transmits the processed residual block to the decoding end. Correspondingly, after receiving and parsing the bitstream, the decoding end performs operations such as inverse transformation and dequantization to obtain a residual block, where the residual block is added to a prediction block obtained by prediction by the decoding end to obtain a reconstructed block.

It should be noted that the inverse transform and dequantization unit 140, the in-loop filtering unit 150, and the decoded image buffering unit 160 in the encoding framework 100 may be used to form a decoder. This is equivalent to that the intra prediction unit 180 or the inter prediction unit 170 may perform prediction on the to-be-encoded image block based on an existing reconstructed block, to ensure that the encoding end and the decoding end have consistent understanding of a reference frame. In other words, an encoder may duplicate a processing loop of a decoder, and in turn, may generate same prediction as the decoding end. Specifically, the inverse transform and dequantization unit 140 performs inverse transform and dequantization on a quantized transform coefficient to replicate an approximate residual block of the decoding end. After a prediction block is added to the approximate residual block, the prediction block may be processed by the in-loop filtering unit 150, to smoothly filter out impact such as a block effect generated due to block-based processing and quantization. An image block output by the in-loop filtering unit 150 may be stored in the decoded image buffering unit 160 for prediction of a subsequent image.

It should be understood that FIG. 1 is merely an example of this application, and shall not be construed as a limitation on this application.

For example, the in-loop filtering unit 150 in the encoding framework 100 may include a deblocking filter (DBF) and a sample adaptive offset (SAO) filter. A function of the DBF is deblocking, and a function of the SAO is deringing. In another embodiment of this application, the encoding framework 100 may use a neural network-based in-loop filtering algorithm, to improve video compression efficiency. In other words, the encoding framework 100 may be a video encoding hybrid framework based on a deep learning neural network. In an implementation, based on the deblocking filter and the sample adaptive offset filter, a convolutional neural network-based model may be used to calculate a result obtained after sample filtering. Network structures of the in-loop filtering unit 150 may be the same or may be different in terms of a luma component and a chroma component. Considering that the luma component includes more visual information, the luma component may be further used to guide filtering of the chroma component, so as to improve reconstruction quality of the chroma component.

FIG. 2 is a schematic block diagram of a decoding framework 200 according to an embodiment of this application.

As shown in FIG. 2, the decoding framework 200 may include an entropy decoding unit 210, an inverse transform and dequantization unit 220, a residual unit 230, an intra prediction unit 240, an inter prediction unit 250, an in-loop filtering unit 260, and a decoded image buffering unit 270.

After receiving and parsing a bitstream, the entropy decoding unit 210 obtains a prediction block and a frequency-domain residual block. The inverse transform and dequantization unit 220 performs operations such as inverse transform and dequantization on the frequency-domain residual block, to obtain a time-domain residual block. The residual unit 230 adds a prediction block obtained by the intra prediction unit 240 or the inter prediction unit 250 to the time-domain residual block obtained by performing inverse transform and dequantization by the inverse transform and dequantization unit 220, to obtain a reconstructed block. For example, the intra prediction unit 240 or the inter prediction unit 250 may obtain the prediction block by decoding header information of the bitstream.

The international video coding standards organization JVET, has established a group to study a coding model beyond H.266/VVC, and named the model as ECM, namely, platform testing software. The ECM has begun to receive newer and more efficient compression algorithms based on VTM 10.0, and has now surpassed encoding performance of VVC by approximately 13%. The ECM not only expands a size of a coding unit with a specific resolution, but also integrates many intra prediction and inter prediction technologies.

The following describes related technologies in this application.

### (1) Most probable modes (Most probable modes, MPM)

The MPM is an intra prediction mode, and usually includes some modes that are most likely to be selected for the current block. An MPM list usually includes one or more of the following modes:
(a) a prediction mode selected for a surrounding adjacent prediction block;
(b) a prediction mode selected for a surrounding non-adjacent prediction block;
(c) a prediction mode derived from surrounding reconstructed pixels by using a decoder side intra mode derivation (Decoder side Intra Mode Derivation, DIMD) mode;
(d) some close angles of angular modes obtained in (a) and (b); or
(e) a default commonly used intra prediction mode.

The prediction mode selected for the surrounding adjacent prediction block may be a prediction mode used by the adjacent prediction block. Similarly, the prediction mode selected for the surrounding non-adjacent prediction block may be a prediction mode used by the non-adjacent prediction block.

The MPM in the ECM includes 22 prediction modes, the first 6 modes are primary (primary) MPM modes, and the last 16 modes are secondary (second) MPM modes. Among the 22 modes of the MPM, a planar (PLANAR) mode is located at the 1^{st} position.

A parsing process of MRL-related syntax elements is roughly shown in Table 1 below.

**Table 1**

| | |
|---|---|
| ... ... | |
| if(!mrl_flag) { | not multiple reference line (Multiple reference line, MRL) intra prediction mode (no need to expand a reference line) |
| **mpm**_**flag** | decode mpm_flag |
| } | |
| else { | |
| mpm_flag = 1 | mpm_flag is set to 1 by default |
| } | |
| if(mpm_flag){ | |
| mpm_idx = 0 | |
| if(multiRefIdx == 0) { | |
| mpm_idx = **decodeBin()** | decode a binary flag of a context model |
| } | |
| else { | |
| Mpm_idx = 1 | |
| } | |
| if(mpm_idx > 0) { | |
| mpm_idx += **decodeBin()** | decode a binary flag of a context model |
| if(mpm idx > 1) | |
| mpm_idx += **decodeEPBin()** | decode an equally probable binary flag |
| if(mpm_idx > 2) | |
| mpm_idx + = **decodeEPBin()** | decode an equally probable binary flag |
| if(mpm_idx > 3) | |
| mpm_idx + = **decodeEPBin()** | decode an equally probable binary flag |
| } | |
| } | |
| ... ... | decode a non-MPM part |

As shown in Table 1, if !mrl_flag, the decoder determines that it is not a multiple reference line (Multiple reference line, MRL) intra prediction mode (there is no need to expand a reference line) and mpm_flag is decoded; otherwise, mpm_flag is set to 1 by default. Further, if mpm_flag is true, mpm_idx is parsed.

### (2) Multiple reference line (Multiple reference line, MRL) mode

The MRL mode not only allows a reconstructed line (Reference line 0) closest to the current block to be used as a reference line for intra prediction, but also allows a reconstructed line not adjacent to the current block as a reference line for intra prediction. The MRL mode may use more reference pixels to improve coding efficiency.

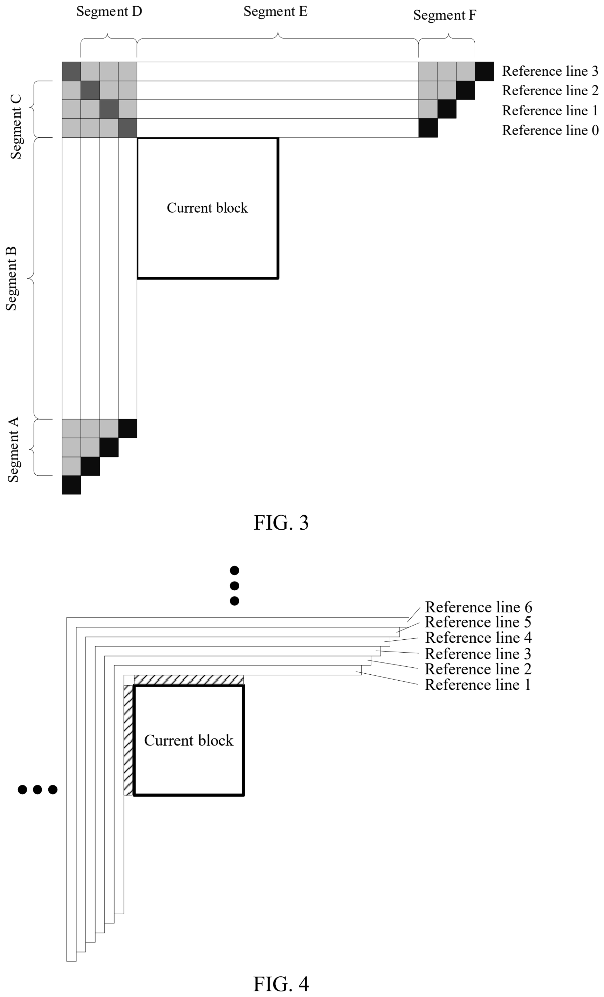

FIG. 3 shows an example of four reference lines located around a current block according to an embodiment of this application.

As shown in FIG. 3, in VVC, reference lines not adjacent to the current block may be reference lines (Reference line) 1 and 2; in the ECM, reference lines not adjacent to the current block may be reference lines (Reference line) 1, 3, 5, 7, and 12. FIG. 3 shows four reference lines: reference lines 0 to 3. The four reference lines may be divided into segments (Segment) A to F.

A parsing process of MRL-related CU-level syntax elements is roughly shown in Table 2 below.

**Table 2**

| | |
|---|---|
| ... ... | |
| if( !sps_mrl_flag | if a sequence-level flag does not allow the use of the MRL, or a current coding unit chooses to use a template-based intra mode derivation (Template based Intra Mode Derivation, TIMD) mode, or the current coding unit chooses to use the decoder side intra mode derivation (Decoder side Intra Mode Derivation, DIMD) mode, or the current coding unit is the 1^{st} line of the coding tree unit, or the current coding unit chooses to use a block differential pulse coding modulation (block differential pulse code modulation, BDPCM) mode, or the current coding unit does not include a luma component |
| \|\| cu.timd | |
| \|\| cu.dimd | |
| \|\| isFirstLineOfCtu | |
| \|\| cu.bdpcmMode | |
| \|\| !cu.Y().valid){ | |
| multiRefIdx = 0 | the MRL is not used |
| } | |
| else { | |
| idx += **decodeBin()** | decode a binary flag of a context model |
| if(idx > 0) | |
| idx += **decodeBin()** | decode a binary flag of a context model |
| if(idx > 1) | |
| idx += **decodeBin()** | decode a binary flag of a context model |
| if(idx > 2) | |
| idx += **decodeBin()** | decode a binary flag of a context model |
| if(idx > 3) | |
| idx += **decodeBin()** | decode a binary flag of a context model |
| if(idx > 4) | |
| idx += **decodeBin()** | decode a binary flag of a context model |
| multiRefldx = MULTI REF LINE IDX[idx] | obtain multiRefldx |
| } | |

As shown in Table 2, if !sps_mrl_flag || cu.timd || cu.dimd || isFirstLineOfCtu ∥ cu.bdpcmMode || !cu.Y().valid, multiRefldx = 0, that is, the decoder determines not to use the MRL; otherwise, the decoder obtains multiRefldx by parsing the bitstream, where multiRefldx is used to indicate a used reference line. MULTI_REF_LINE_IDX is an array with a length of 6 and the array is {0, 1, 3, 5, 7, 12}. The decoding end may obtain an index of a current reference line based on the obtained multiRefldx and the array.

In addition, the MRL mode and the TIMD mode may be used at the same time. When the current block uses the TIMD mode, a parsing process of MRL-related CU-level syntax elements is roughly shown in Table 3.

**Table 3**

| | |
|---|---|
| ... ... | |
| if( (!sps_mrl_flag | if a sequence-level flag does not allow use of the MRL, or the current coding unit chooses to use the DIMD mode, or the current coding unit is the 1^{st} line of the coding tree unit, or the current coding unit chooses to use the BDPCM mode, or the current coding unit does not include a luma component |
| \|\| cu.dimd | |
| \|\| isFirstLineOfCtu | |
| \|\| cu.bdpcmMode | |
| \|\| !cu.Y().valid)){ | |
| multiRefldx = 0 | the MRL in the TIMD mode is not used |
| } | |
| else if(cu.timd) { | if the current coding unit chooses to use the TIMD mode |
| idx += **decodeBin()** | decode a binary flag of a context model |
| if(idx > 0) | |
| idx += **decodeBin()** | decode a binary flag of a context model |
| multiRefldx = MULTI_REF_LINE_IDX[idx] | obtain multiRefldx |
| } | |

As shown in Table 3, if !sps_mrl_flag || cu.timd || cu.dimd || isFirstLineOfCtu || cu.bdpcmMode || !cu.Y().valid, the decoder determines not to use the MRL in the TIMD mode; otherwise, if the current coding unit chooses to use the TIMD mode, the decoder obtains multiRefldx by parsing the bitstream, where the multiRefldx is used to indicate a used reference line. MULTI_REF_LINE_IDX is an array with a length of 6 and the array is {0, 1, 3, 5, 7, 12}. The decoding end may obtain an index of a current reference line based on the obtained multiRefldx and the array.

It should be noted that the MPM technology is a technology used for determining a prediction mode, the MRL technology is a technology used for determining a reference line, and the MPM technology and the MRL technology may be used together or may be used separately, which is not specifically limited in this application.

### (3) Template-based multiple reference line (Template-based Multiple Reference Line, TMRL) mode

The TMRL mode is an extension of the MRL technology. The TMRL mode uses a template matching technology to rank reconstruction lines and prediction modes that may be used for the current block, and constructs a TMRL candidate list based on a combination of more likely reconstruction lines and prediction modes. The decoder parses candidate indexes to select, from the TMRL candidate list, a reconstructed line and a prediction mode selected for the current block, and performs prediction.

For the TMRL mode, the decoder needs to complete the following steps:
1. Obtaining reconstructed lines that can be used and possible intra prediction modes.
2. Performing intra prediction on a template area by using each possible reconstruction line and intra prediction mode, and calculating a difference between a prediction result and a reconstruction result for each combination. For example, the difference may be a sum of absolute differences (Sum of Absolute Differences, SAD).
3. Ranking SAD values of all combinations in ascending order, and selecting combinations with smaller SAD values as a TMRL candidate list.

If the reconstructed lines that can be used are {0, 1, 3, 5, 7, 12} and the possible intra prediction modes include 10 prediction modes, the decoder performs intra prediction on the template area by using each possible reconstructed line and intra prediction mode, and calculates an SAD of a prediction result and a reconstruction result for each combination, to obtain 50 SADs. Then, the decoder ranks the 50 SADs in ascending order and selects 20 combinations with smaller SAD values as the TMRL candidate list.

It should be noted that, because the TMRL mode is to configured to obtain 10 possible intra prediction modes for each intra prediction block, and a length of the TMRL candidate list is 20, the TMRL can work normally only when there are at least two reconstructed lines available for the current block.

FIG. 4 is an example of a template and reference lines located around a current block according to an embodiment of this application.

As shown in FIG. 4, an area in which a reference line 0 is located is a template area of the current block, and reconstructed lines of the current block include reference lines (reference line) 1 to 6.

A parsing process of TMRL mode-related CU-level syntax elements is roughly shown in Table 4 below.

**Table 4**

| | |
|---|---|
| ... ... | |
| if( (sps_mrl_flag | if a sequence-level flag allows use of the MRL, and the current block does not use the DIMD mode, and does not use the TIMD mode, and does not use the BDPCM mode, and the current block is not located on the 1^{st} line of a CTU, and the current block is a luma block |
| && !dimd | |
| && ! timd | |
| && !isFirstLineOfCtu | |
| && !bdpcmMode | |
| && cu. Y().valid)){ | |
| **decode(tmrlFlag)** | decode tmrlFlag |
| if(tmrlFlag) | |
| **decode(tmrlListIdx)** | decode an index of a candidate in the TMRL candidate list |
| } | |

As shown in Table 4, if sps_mrl_flag && !dimd && !timd && !isFirstLineOfCtu && !bdpcmMode && cu.Y().valid, the decoder decodes tmrlFlag; otherwise, if tmrlFlag is true, the decoder obtains tmrlListIdx by parsing the bitstream, where tmrlListIdx is used to indicate a candidate in the TMRL candidate list.

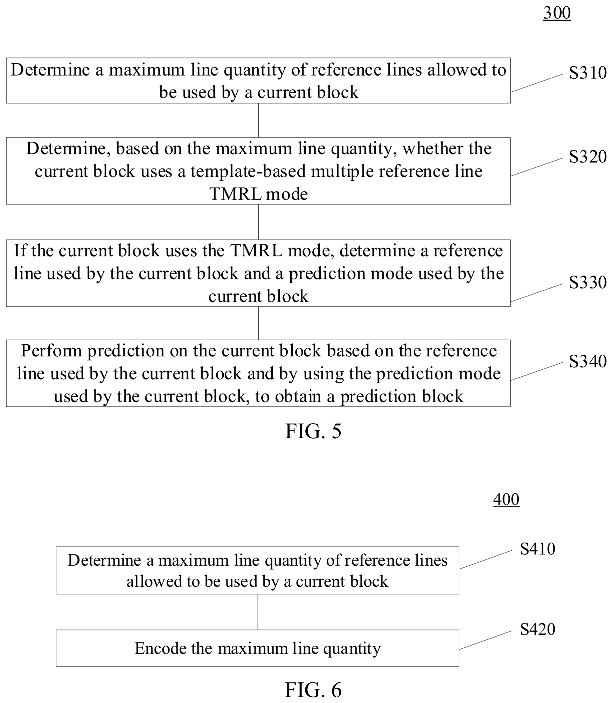

FIG. 5 is a schematic flowchart of a decoding method 300 according to an embodiment of this application. It should be understood that the decoding method 300 may be executed by a decoder, and the decoding method is applied, for example, to the decoding framework 200 shown in FIG. 2. For ease of description, the following uses a decoder as an example.

As shown in FIG. 5, the decoding method 300 may include the following steps S310 to S340.

S310: The decoder determines a maximum line quantity of reference lines allowed to be used by a current block. For example, if the current block is not the first line of a current CTU, the current block does not use a DIMD mode, the current block does not use a BDPCM mode, and the current block is a luma block, the decoder determines the maximum line quantity by decoding a bitstream.

Exemplarily, the decoder determines the maximum line quantity by decoding the bitstream.

Exemplarily, a reference line used by the current block may be a reference line that is not (or non-adjacent) adjacent to the current block.

Exemplarily, a reference line used by the current block may be a reference line formed by reconstructed samples located above and to the left of the current block.

It should be understood that the "maximum line quantity of reference lines allowed to be used by the current block" is intended to describe a line quantity of reference lines for the current block. The decoder may select a reference line actually used by the current block from the "reference lines that can be used by the current block". That is, the decoder may select, from the "lines that can be used as reference lines for the current block", the reference line used to predict the current block. That is, "the maximum line quantity of reference lines allowed to be used by the current block" may be understood as or equivalently replaced by: "the maximum line quantity of reference lines allowed to be used for the current block", "the quantity of lines that can be sued as reference lines of the current block", "the quantity of lines allowed to be used at most by the current block", "the maximum line quantity of reference lines that can be used by the current block", "the line quantity of reference lines that can be used at most by the current block", and other terms or descriptions with similar meanings, which is not specifically limited in this application.

S320: The decoder determines, based on the maximum line quantity, whether the current block uses a template-based multiple reference line (Template-based Multiple Reference Line, TMRL) mode.

Exemplarily, if the maximum line quantity satisfies a use condition of the TMRL mode, the decoder determines that the current block uses the TMRL mode; otherwise, the decoder determines that the current block does not use the TMRL mode. For example, if the maximum line quantity satisfies the use condition of the TMRL mode, the decoder determines, by decoding the bitstream, that the current block uses the TMRL mode; otherwise, the decoder determines that the current block does not use the TMRL mode, that is, the decoder determines, by decoding the bitstream, that the current block uses a prediction mode other than the TMRL mode. The maximum line quantity satisfying the use condition of the TMRL mode may be understood as that the maximum line quantity satisfies a specific-length TMRL mode list constructed by the decoder.

S330: If the current block uses the TMRL mode, the decoder determines a reference line used by the current block and a prediction mode used by the current block.

Exemplarily, if the current block uses the TMRL mode, the decoder determines, by decoding the bitstream, the reference line used by the current block and the prediction mode used by the current block.

S340: The decoder performs prediction on the current block based on the reference line used by the current block and by using the prediction mode used by the current block, to obtain a prediction block.

Exemplarily, if the prediction mode used by the current block is angular prediction mode, the decoder may determine, based on an angle indicated by the angular prediction mode, a reconstructed sample in the reference line used by the current block as a predicted sample in the current block, so as to obtain the prediction block of the current block.

In embodiments of this application, when performing prediction on a current block, a decoder first determines a maximum line quantity of reference lines allowed to be used by the current block; then the decoder determines, based on the maximum line quantity, whether the current block uses a TMRL mode; if the current block uses the TMRL mode, the decoder determines a reference line used by the current block and a prediction mode used by the current block; and then, the decoder performs prediction on the current block based on the reference line used by the current block and by using the prediction mode used by the current block, to obtain a prediction block. That is, in predicting the current block, the decoder determines whether the current block uses the TMRL mode based on the maximum line quantity, so that the current block uses the TMRL mode when a condition for the maximum line quantity is satisfied, thereby improving decoding performance.

In some embodiments, S310 may include:
obtaining, by the decoder, a first flag,
where a value of the first flag being a first value indicates that a current sequence to which the current block belongs does not use a multiple reference line MRL mode; or the value of the first flag being a second value other than the first value indicates that the current sequence uses the MRL mode and indicates the maximum line quantity.

Exemplarily, the first flag may be denoted as sps_mrl_enabled_flag, that is, sps_mrl_enabled_flag is a sequence-level MRL control flag. A value of sps_mrl_enabled_flag ranges from 0 to x (x is a positive integer). When a value of sps_mrl_enabled_flag is 0, it indicates that the sequence-level MRL is disabled. When the value of sps_mrl_enabled_flag is 1 to x, it indicates that the current sequence uses the MRL mode and indicates the maximum line quantity. For example, when the value of sps_mrl_enabled_flag is i (1 ≤ i ≤ x), it indicates that the current sequence uses the MRL mode and indicates that the maximum line quantity is a value determined according to i. For example, in the ECM, the value of the second flag ranges from 0 to 5, and the second flag may be represented by a 3-bit fixed-length code "u(3)".

Exemplarily, when the first flag does not exist in the bitstream obtained by the decoder, the value of the first flag may be 0 or another numerical value by default.

Exemplarily, when the value of the first flag is the second value, the decoder directly determines the second value as the maximum line quantity. For example, when the value of the first flag is 5, the decoder determines the value of the first flag (that is, 5) as the maximum line quantity.

Exemplarily, when the value of the first flag is the second value, the decoder may determine, based on a correspondence between at least one value and at least one line quantity, a line quantity corresponding to the second value as the maximum line quantity. The at least one value includes the second value. For example, when the value of the first flag is 4, the decoder determines, based on a correspondence between at least one value and at least one line quantity, a line quantity (for example, 5) corresponding to 4 as the maximum line quantity.

Certainly, in another alternative embodiment, the first flag may be an image-level flag or an image block-level flag.

For example, if the first flag is an image-level flag, the value of the first flag being the first value indicates that a current image to which the current block belongs does not use the multiple reference line MRL mode, or the value of the first flag being the second value other than the first value indicates that the current image uses the MRL mode and indicates the maximum line quantity.

For another example, if the first flag is an image block-level flag, the value of the first flag being the first value indicates that the current block does not use the multiple reference line MRL mode, or the value of the first flag being the second value other than the first value indicates that the current block uses the MRL mode and indicates the maximum line quantity.

It should be noted that, when the value of the first flag is the second value, the value of the first flag may be used to indicate that the current sequence uses the MRL mode and indicates the maximum line quantity, and may be further used to indicate a reference line allowed to be used by the current block. In other words, the value of the first flag is used to indicate the following content: the current sequence using the MRL mode, the maximum line quantity, and the reference line allowed to be used by the current block.

For example, if a maximum value of the first flag is 5,
when the value of the first flag is 0, it indicates that the current sequence does not use the MRL mode; when the value of the first flag is 1, the following content is indicated: the current sequence uses the MRL mode, the maximum line quantity is 1, and the reference line allowed to be used by the current block is a reference line 1; when the value of the first flag is 2, the following content is indicated: the current sequence uses the MRL mode, the maximum line quantity is 2, and reference lines allowed to be used by the current block include reference lines 1 and 3; when the value of the first flag is 3, the following content is indicated: the current sequence uses the MRL mode, the maximum line quantity is 3, and reference lines allowed to be used by the current block include reference lines 1, 3, and 5; when the value of the first flag is 4, the following content is indicated: the current sequence uses the MRL mode, the maximum line quantity is 4, and reference lines allowed to be used by the current block include reference lines 1, 3, 5, and 7; or when the value of the first flag is 5, the following content is indicated: the current sequence uses the MRL mode, the maximum line quantity is 5, and reference lines allowed to be used by the current block include reference lines 1, 3, 5, 7, and 12.

Certainly, in another alternative embodiment, there may be another correspondence between the second value and the reference line allowed to be used by the current block, which is not specifically limited in this application.

In some embodiments, S310 may include:
obtaining, by the decoder, a second flag; and
determining, by the decoder, a line quantity indicated by the second flag as the maximum line quantity.

Exemplarily, the first flag may be denoted as num_non_adjacent_ref_line. A value of num_non_adjacent_ref_line ranges from 0 to x (x is a positive integer), indicating the maximum line quantity. For example, when the value of sps_mrl_enabled_flag is i (1 ≤ i ≤ x), it indicates that the maximum line quantity is a value determined according to i. For example, in the ECM, the value of the second flag ranges from 0 to 5, and the second flag may be represented by a 3-bit fixed-length code "u(3)".

Exemplarily, when the second flag does not exist in the bitstream obtained by the decoder, the value of the second flag may be 0 or another numerical value by default.

Exemplarily, the decoder directly determines the value of the second flag as the maximum line quantity. For example, when the value of the second flag is 5, the decoder determines the value of the second flag (that is, 5) as the maximum line quantity.

Exemplarily, the decoder may determine, based on a correspondence between at least one value and at least one line quantity, a line quantity corresponding to the value of the second flag as the maximum line quantity. The at least one value includes the value of the second flag. For example, when the value of the second flag is 4, the decoder determines, based on a correspondence between at least one value and at least one line quantity, a line quantity (for example, 5) corresponding to 4 as the maximum line quantity.

Exemplarily, the second flag is a sequence-level flag.

Certainly, in another alternative embodiment, the second flag may be an image-level flag or an image block-level flag.

For example, if the second flag is an image-level flag, the second flag indicates a line quantity of reference lines allowed to be used by a current image to which the current block belongs.

For another example, if the second flag is an image block-level flag, the second flag indicates a line quantity of reference lines allowed to be used by the current block.

It should be noted that the second flag may be used to indicate the maximum line quantity, and may be further used to indicate a reference line allowed to be used by the current block. In other words, the value of the second flag is used to indicate the following content: the maximum line quantity, and the reference line allowed to be used by the current block.

For example, if a maximum value of the second flag is 5,
when the value of the second flag is 0, the following content is indicated: the maximum line quantity is 0, and the reference line allowed to be used by the current block is empty; when the value of the second flag is 1, the following content is indicated: the maximum line quantity is 1, and the reference line allowed to be used by the current block is a reference line 1; when the value of the second flag is 2, the following content is indicated: the maximum line quantity is 2, and reference lines allowed to be used by the current block include reference lines 1 and 3; when the value of the second flag is 3, the following content is indicated: the maximum line quantity is 3, and reference lines allowed to be used by the current block include reference lines 1, 3, and 5; when the value of the second flag is 4, the following content is indicated: the maximum line quantity is 4, and reference lines allowed to be used by the current block include reference lines 1, 3, 5, and 7; or when the value of the second flag is 5, the following content is indicated: the maximum line quantity is 5, and reference lines allowed to be used by the current block include reference lines 1, 3, 5, 7, and 12.

Certainly, in another alternative embodiment, there may be another correspondence between the value of the second flag and the reference line allowed to be used by the current block, which is not specifically limited in this application.

In some embodiments, S320 may include:
if the maximum line quantity is greater than a first preset threshold, obtaining, by the decoder, a third flag; and
if the third flag indicates that the current sequence to which the current block belongs is allowed to use the TMRL mode, obtaining, by the decoder, a fourth flag,
where the fourth flag indicates whether the current block uses the TMRL mode.

Exemplarily, if the maximum line quantity is greater than the first preset threshold, the decoder decodes the bitstream to obtain the third flag; and if the third flag indicates that the current sequence to which the current block belongs is allowed to use the TMRL mode, the decoder decodes the bitstream to obtain the fourth flag, where the fourth flag indicates whether the current block uses the TMRL mode.

Exemplarily, the first preset threshold may be a protocol-predefined threshold.

Exemplarily, the first preset threshold may be 1, 2, or another value, which is not specifically limited in this application.

Exemplarily, the third flag may be denoted as sps_tmrl_enabled_flag, and the fourth flag may be denoted as cu_tmrl_flag.

If the maximum line quantity is greater than the first preset threshold (for example, the first preset threshold is 1), the decoder decodes the bitstream to obtain sps_tmrl_enabled_flag; and if sps_tmrl_enabled_flag indicates that the current sequence to which the current block belongs is allowed to the TMRL mode (for example, the value of sps_tmrl_enabled_flag is 1), the decoder decodes the bitstream to obtain cu_tmrl_flag. When a value of cu_tmrl_flag is 1, it indicates that the current block uses the TMRL mode, or when a value of cu_tmrl_flag is 0, it indicates that the current block does not use the TMRL mode.

In some embodiments, if the third flag indicates that the current sequence is allowed to use the TMRL mode and the current block does not use a TIMD mode, the decoder obtains the fourth flag.

Exemplarily, the decoder may determine, by decoding the bitstream, whether the current block uses the TIMD mode.

Exemplarily, the third flag may be denoted as sps_tmrl_enabled_flag, and the fourth flag may be denoted as cu_tmrl_flag.

If the maximum line quantity is greater than the first preset threshold (for example, the first preset threshold is 1), the decoder decodes the bitstream to obtain sps_tmrl_enabled_flag; and if sps_tmrl_enabled_flag indicates that the current sequence to which the current block belongs is allowed to use the TMRL mode (for example, the value of sps_tmrl_enabled_flag is 1) and the current block does not use the TIMD mode, the decoder decodes the bitstream to obtain cu_tmrl_flag. When a value of cu_tmrl_flag is 1, it indicates that the current block uses the TMRL mode, or when a value of cu_tmrl_flag is 0, it indicates that the current block does not use the TMRL mode.

In some embodiments, S320 may include:
obtaining, by the decoder, a third flag; and
if the third flag indicates that the current sequence to which the current block belongs is allowed to use the TMRL mode and the maximum line quantity is greater than a first preset threshold, obtaining, by the decoder, a fourth flag,
where the fourth flag indicates whether the current block uses the TMRL mode.

Exemplarily, the decoder decodes the bitstream to obtain the third flag; and if the third flag indicates that the current sequence to which the current block belongs is allowed to use the TMRL mode and the maximum line quantity is greater than the first preset threshold, the decoder decodes the bitstream to obtain the fourth flag, where the fourth flag indicates whether the current block uses the TMRL mode.

Exemplarily, the first preset threshold may be a protocol-predefined threshold.

Exemplarily, the first preset threshold may be 1, 2, or another value, which is not specifically limited in this application.

Exemplarily, the third flag may be denoted as sps_tmrl_enabled_flag, and the fourth flag may be denoted as cu_tmrl_flag.

The decoder decodes the bitstream to obtain sps_tmrl_enabled_flag; and if sps_tmrl_enabled_flag indicates that the current sequence to which the current block belongs is allowed to use the TMRL mode (for example, a value of sps_tmrl_enabled_flag is 1) and the maximum line quantity is greater than the first preset threshold (for example, the first preset threshold is 1), the decoder decodes the bitstream to obtain cu_tmrl_flag. When a value of cu_tmrl_flag is 1, it indicates that the current block uses the TMRL mode, or when a value of cu_tmrl_flag is 0, it indicates that the current block does not use the TMRL mode.

In some embodiments, if the third flag indicates that the current sequence is allowed to use the TMRL mode, the maximum line quantity is greater than the first preset threshold, and the current block does not use a template-based intra mode derivation TIMD mode, it is determined that the current block uses the TMRL mode.

Exemplarily, the third flag may be denoted as sps_tmrl_enabled_flag, and the fourth flag may be denoted as cu_tmrl_flag.

The decoder decodes the bitstream to obtain sps_tmrl_enabled_flag; and if sps_tmrl_enabled_flag indicates that the current sequence to which the current block belongs is allowed to use the TMRL mode (for example, a value of sps_tmrl_enabled_flag is 1), the maximum line quantity is greater than the first preset threshold (for example, the first preset threshold is 1), and the current block does not use the TIMD mode, the decoder decodes the bitstream to obtain cu_tmrl_flag. When a value of cu_tmrl_flag is 1, it indicates that the current block uses the TMRL mode, or when a value of cu_tmrl_flag is 0, it indicates that the current block does not use the TMRL mode.

In some embodiments, if the current sequence is allowed to use the MRL mode, the decoder obtains the third flag.

Exemplarily, if the decoder determines, by decoding the bitstream, that the current sequence is allowed to use the MRL mode, the decoder obtains the third flag, and determines, based on the third flag, whether the current sequence is allowed to use the TMRL mode. Otherwise, the decoder determines that the current sequence does not use the TMRL mode. Alternatively, if the decoder determines, by decoding the bitstream, that the current sequence is allowed to use the MRL mode, the decoder obtains the third flag, and determines, based on the third flag, whether the current sequence is allowed to use the TMRL mode. Otherwise, the decoder determines that the current block does not use the TMRL mode, that is, the decoder determines, by decoding the bitstream, that the current block uses a prediction mode other than the TMRL mode.

Exemplarily, the third flag may be denoted as sps_tmrl_enabled_flag, and a flag indicating whether the current sequence is allowed to use the MRL mode may be denoted as sps_mrl_enabled_flag.

If the current sequence is allowed to use the MRL mode (for example, sps_mrl_enabled_flag is set to 1), the decoder decodes the bitstream to obtain sps_tmrl_enabled_flag, and determines, based on a value of sps_tmrl_enabled_flag, whether the current sequence is allowed to use the TMRL mode. For example, when the value of sps_tmrl_enabled_flag is 1, it indicates that the current sequence is allowed to use the TMRL mode, or when the value of sps_tmrl_enabled_flag is 0, it indicates that the current sequence is not allowed to use the TMRL mode.

In some embodiments, the decoder obtains a fifth flag; and if the fifth flag indicates that a value of the third flag is not restricted or the fifth flag does not restrict a value of a flag used for indicating whether the current sequence is allowed to use the multiple reference line MRL mode, the decoder obtains the third flag.

Exemplarily, the decoder decodes the bitstream to obtain the fifth flag; and if the fifth flag indicates that the value of the third flag is not restricted, or the fifth flag does not restrict the value of the flag used for indicating whether the current sequence is allowed to use the MRL mode, the decoder decodes the bitstream to obtain the third flag.

Exemplarily, the fifth flag is general constraints information (General constraints information, GCI) of the third flag, and is used to restrict the value of the third flag.

The third flag may be denoted as sps_tmrl_enabled_flag, and the GCI of the third flag may be denoted as gci_no_tmrl_constraint_flag, where gci_no_tmrl_constraint_flag indicates whether the sps_tmrl_enabled_flag is restricted. For example, when a value of gci_no_tmrl_constraint_flag is 1, a value of sps_tmrl_enabled_flag must be equal to 0. Otherwise, the value of sps_tmrl_enabled_flag is not restricted.

The decoder decodes the bitstream to obtain gci_no_tmrl_constraint_flag; and if gci_no_tmrl_constraint_flag indicates that the value of sps_tmrl_enabled_flag is not restricted (for example, the value of the gci_no_tmrl_constraint_flag is 0), the decoder decodes the bitstream to obtain sps_tmrl_enabled_flag, and determines, based on the value of sps_tmrl_enabled_flag, whether the current sequence is allowed to use the TMRL mode. For example, when the value of sps_tmrl_enabled_flag is 1, it indicates that the current sequence is allowed to use the TMRL mode, or when the value of sps_tmrl_enabled_flag is 0, it indicates that the current sequence is not allowed to use the TMRL mode.

Exemplarily, the fifth flag is a GCI of a flag used for indicating whether the current sequence is allowed to use the multiple reference line MRL mode, to restrict a value of the flag used for indicating whether the current sequence is allowed to use the multiple reference line MRL mode.

The third flag may be denoted as sps_tmrl_enabled_flag, and the GCI of the third flag may be denoted as gci_no_mrl_constraints_flag, where gci_no_mrl_constraints_flag indicates whether sps_tmrl_enabled_flag and sps_mrl_enabled_flag are restricted. For example, when the value of gci_no_tmrl_constraint_flag is 1, both the value of sps_tmrl_enabled_flag and the value of sps_mrl_enabled_flag must be equal to 0. Otherwise, the values of sps_tmrl_enabled_flag and sps_mrl_enabled_flag are not restricted.

The decoder decodes the bitstream to obtain gci_no_mrl_constraints_flag; and if gci_no_mrl_constraints_flag indicates that sps_tmrl_enabled_flag and sps_mrl_enabled_flag are not restricted (for example, the value of gci_no_mrl_constraints_flag is 0), the decoder decodes the bitstream to obtain sps_tmrl_enabled_flag, and determines, based on the value of sps_tmrl_enabled_flag, whether the current sequence is allowed to use the TMRL mode. For example, when the value of sps_tmrl_enabled_flag is 1, it indicates that the current sequence is allowed to use the TMRL mode; or when the value of sps_tmrl_enabled_flag is 0, it indicates that the current sequence is not allowed to use the TMRL mode.

In some embodiments, the decoder obtains a sixth flag; and if the sixth flag indicates that the current sequence is allowed to use a template-based mode, the decoder obtains the third flag.

Exemplarily, the decoder decodes the bitstream to obtain the sixth flag; and if the sixth flag indicates that the current sequence is allowed to use the template-based mode, the decoder decodes the bitstream to obtain the third flag.

Exemplarily, the third flag may be denoted as sps_tmrl_enabled_flag, and the sixth flag may be denoted as sps_tm_enabled_flag.

The decoder decodes the bitstream to obtain sps_tm_enabled_flag; and if sps_tm_enabled_flag indicates that the current sequence is allowed to use the template-based mode (for example, the value of the sps_tm_enabled_flag is 1), the decoder decodes the bitstream to obtain sps_tmrl_enabled_flag, and determines, based on the value of sps_tmrl_enabled_flag, whether the current sequence is allowed to use the TMRL mode. For example, when the value of sps_tmrl_enabled_flag is 1, it indicates that the current sequence is allowed to use the TMRL mode; or when the value of sps_tmrl_enabled_flag is 0, it indicates that the current sequence is not allowed to use the TMRL mode.

In some embodiments, the decoder obtains a seventh flag; and if the seventh flag indicates that a value of the sixth flag is not restricted, the decoder obtains the sixth flag.

Exemplarily, the seventh flag is general constraints information (General constraints information, GCI) of the sixth flag, and is used to restrict the value of the sixth flag.

The third flag may be denoted as sps_tmrl_enabled_flag, the sixth flag may be denoted as sps_tm_enabled_flag, and the seventh flag may be denoted as gci_no_tm_constraints_flag, where gci_no_tm_constraints_flag indicates whether sps_tm_enabled_flag is restricted. For example, when a value of gci_no_tm_constraints_flag is 1, the value of sps_tm_enabled_flag must be equal to 0. Otherwise, the value of sps_tm_enabled_flag is not restricted.

The decoder decodes the bitstream to obtain gci_no_tm_constraints_flag; if gci_no_tm_constraints_flag indicates that the value of sps_tm_enabled_flag is not restricted (for example, a value of gci_no_tm_constraints_flag is 0), the decoder decodes the bitstream to obtain sps_tm_enabled_flag; if sps_tm_enabled_flag indicates that the current sequence is allowed to use the template-based mode (for example, the value of sps_tm_enabled_flag is 1), the decoder decodes the bitstream to obtain sps_tmrl_enabled_flag, and determines, based on the value of the sps_tmrl_enabled_flag, whether the current sequence is allowed to use the TMRL mode. For example, when the value of sps_tmrl_enabled_flag is 1, it indicates that the current sequence is allowed to use the TMRL mode; or when the value of sps_tmrl_enabled_flag is 0, it indicates that the current sequence is not allowed to use the TMRL mode.

In some embodiments, S330 may include:
determining, by the decoder, a reference line corresponding to the maximum line quantity as a reference line allowed to be used by the current block;
constructing, by the decoder, a TMRL mode list based on the reference line allowed to be used by the current block and a prediction mode allowed to be used by the current block;
obtaining, by the decoder, a first index; and
determining, by the decoder, a reference line and a prediction mode that are included in a combination indicated by the first index in the TMRL mode list as the reference line used by the current block and the prediction mode used by the current block.

Exemplarily, the decoder may determine, based on a correspondence between at least one line quantity and at least one reference line set, reference lines in a reference line set corresponding to the maximum line quantity as reference lines allowed to be used by the current block, where the at least one line quantity includes the maximum line quantity.

For example, if a value of the maximum line quantity ranges from 0 to 5,
when the maximum line quantity is 0, the reference line allowed to be used by the current block is empty; when the maximum line quantity is 1, the reference line allowed to be used by the current block is a reference line 1; when the maximum line quantity is 2, reference lines allowed to be used by the current block may include reference lines 1 and 3; when the maximum line quantity is 3, reference lines allowed to be used by the current block may include reference lines 1, 3, and 5; when the maximum line quantity is 4, reference lines allowed to be used by the current block include reference lines 1, 3, 5, and 7; or when the maximum line quantity is 5, reference lines allowed to be used by the current block may include reference lines 1, 3, 5, 7, and 12.

Certainly, in another alternative embodiment, there may be another correspondence between the maximum line quantity and the reference line allowed to be used by the current block, which is not specifically limited in this application.

Exemplarily, the decoder decodes the bitstream to obtain the first index.

In some embodiments, for each of at least one combination obtained by using the reference line allowed to be used by the current block and the prediction mode allowed to be used by the current block, the decoder predicts a template of the current block based on a reference line of the combination and by using a prediction mode of the combination, to obtain a prediction cost of each combination; based on the prediction cost of each combination, the decoder ranks the at least one combination in an ascending order of prediction costs, to obtain a ranked combination; and the decoder determines a combination ranked high in the ranked combination as a combination in the TMRL mode list.

Exemplarily, assuming that reference lines allowed to be used by the current block include {0, 1, 3, 5, 7, 12}, and prediction modes allowed to be used by the current block include 10 prediction modes, the reference lines allowed to be used by the current block and the prediction modes allowed to be used by the current block may form 50 combinations. The decoder performs prediction on a template area of the current block based on a reference line included in each of the 50 combinations and by using a prediction mode included in each combination (that is, predicts the template of the current block), and calculates a difference value between a prediction result of a template of the current block and a reconstructed result of the template of the current block for each combination. For example, the difference value may be a sum of absolute differences (Sum of Absolute Differences, SAD). After obtaining 50 SADs, the decoder may rank the 50 SADs in ascending order, and select a plurality of combinations with smaller SAD values as the TMRL mode list. A quantity of combinations selected by the decoder may be determined based on a length of the TMRL mode list.

In some embodiments, the method 300 may further include:
determining, by the decoder based on whether the current block uses the TIMD mode, the reference line used by the current block, if the current block does not use the TMRL mode.

Exemplarily, if the maximum line quantity is greater than the first preset threshold (for example, the first preset threshold is 1), the decoder decodes the bitstream to obtain sps_tmrl_enabled_flag; if sps_tmrl_enabled_flag indicates that the current sequence to which the current block belongs is allowed to use the TMRL mode (for example, the value of sps_tmrl_enabled_flag is 1) and the current block does not use the TIMD mode, the decoder decodes the bitstream to obtain cu_tmrl_flag; and if cu_tmrl_flag indicates that the current block does not use the TMRL mode (for example, the value of cu_tmrl_flag is 0), the decoder determines, based on whether the current block uses the TIMD mode, the reference line used by the current block.

Exemplarily, the decoder decodes the bitstream to obtain sps_tmrl_enabled_flag; if sps_tmrl_enabled_flag indicates that the current sequence to which the current block belongs is allowed to use the TMRL mode (for example, the value of sps_tmrl_enabled_flag is 1), the maximum line quantity is greater than the first preset threshold (for example, the first preset threshold is 1), and the current block does not use the TIMD mode, the decoder decodes the bitstream to obtain cu_tmrl_flag; and if cu_tmrl_flag indicates that the current block does not use the TMRL mode (for example, the value of cu_tmrl_flag is 0), the decoder determines, based on whether the current block uses the TIMD mode, the reference line used by the current block.

Certainly, in another alternative embodiment, when determining that the current sequence does not use the TMRL mode or the current block does not satisfy a use condition of the TMRL mode, the decoder determines that the current block does not use the TMRL mode. In this case, the decoder may directly determine, based on whether the current block uses the TIMD mode, the reference line used by the current block. In other words, when determining that the current sequence does not use the TMRL mode or the current block does not satisfy the use condition of the TMRL mode, the decoder may skip decoding cu_tmrl_flag, and directly determine, based on whether the current block uses the TIMD mode, the reference line used by the current block. For example, if sps_tmrl_enabled_flag indicates that the current sequence to which the current block belongs does not use the TMRL mode (for example, the value of sps_tmrl_enabled_flag is 0), the decoder may skip decoding cu_tmrl_flag, and directly determine, based on whether the current block uses the TIMD mode, the reference line used by the current block. For another example, if the current block uses the TIMD mode, the decoder may skip decoding cu_tmrl_flag, and directly decode the bitstream to determine a reference line used when the current block uses the TIMD mode.

Exemplarily, if the current block uses the TIMD mode, the decoder decodes the bitstream to determine a reference line used when the current block uses the TIMD mode; or if the current block does not use the TIMD mode, the decoder decodes the bitstream to determine a reference line used when the current block does not use the TIMD mode.

In some embodiments, if the current block uses the TIMD mode, the decoder obtains a second index; or if the current block does not use the TIMD mode, the decoder obtains a third index, where the second index indicates a reference line used when the current block uses the TIMD mode, and the third index indicates a reference line used when the current block does not use the TIMD mode.

Exemplarily, the second index may be multiRefldx shown in Table 3. To avoid repetition, details are not described herein again.

Exemplarily, the third index may be multiRefldx shown in Table 2. To avoid repetition, details are not described herein again.

In some embodiments, the decoder obtains an eighth flag; and if the eighth flag indicates that the current sequence to which the current block belongs is allowed to use the MRL mode and the current block does not use the TMRL mode, the decoder determines, based on whether the current block uses the TIMD mode, the reference line used by the current block.

Exemplarily, the decoder decodes the bitstream to obtain the eighth flag; and if the eighth flag indicates that the current sequence to which the current block belongs is allowed to use MRL mode and the current block does not use the TMRL mode, the decoder determines, based on whether the current block uses the TIMD mode, the reference line used by the current block.

Exemplarily, the eighth flag may be denoted as sps_mrl_enabled_flag.

The decoder decodes the bitstream to obtain sps_mrl_enabled_flag; and if sps_mrl_enabled_flag indicates that the current sequence to which the current block belongs is allowed to use the MRL mode (for example, the value of sps_mrl_enabled_flag is 1) and the current block does not use the TMRL mode, the decoder determines, based on whether the current block uses the TIMD mode, the reference line used by the current block.

In some embodiments, if the maximum line quantity is greater than or equal to a second preset threshold, the decoder obtains the eighth flag.

Exemplarily, the second preset threshold may be a protocol-predefined threshold.

Exemplarily, the second preset threshold may be 0 or another value, which is not specifically limited in this application.

If the maximum line quantity is greater than or equal to the second preset threshold, the decoder decodes the bitstream to obtain sps_mrl_enabled_flag; and if sps_mrl_enabled_flag indicates that the current sequence to which the current block belongs is allowed to use the MRL mode (for example, the value of sps_mrl_enabled_flag is 1) and the current block does not use the TMRL mode, the decoder determines, based on whether the current block uses the TIMD mode, the reference line used by the current block.

In some embodiments, if the eighth flag indicates that the current sequence is allowed to use the multiple reference line MRL mode, the maximum line quantity is greater than or equal to a second preset threshold, and the current block does not use the TMRL mode, the decoder determines, based on whether the current block uses the TIMD mode, the reference line used by the current block.

The decoder decodes the bitstream to obtain sps_mrl_enabled_flag; and if sps_mrl_enabled_flag indicates that the current sequence to which the current block belongs is allowed to use the MRL mode (for example, the value of sps_mrl_enabled_flag is 1), the maximum line quantity is greater than or equal to the second preset threshold, and the current block does not use the TMRL mode, the decoder determines, based on whether the current block uses the TIMD mode, the reference line used by the current block.

The following exemplarily describes a sequence-level flag in this application. Syntax elements in bold in the following tables are syntax elements that can be obtained by decoding a bitstream.
1. sps_mrl_enabled_flag.

**Table 5**

| | |
|---|---|
| seq parameter set _rbsp( ) { | **Descriptor** |
| ...... | |
| **sps_mrl_enabled_flag** | **u(1)** |
| ...... | |
| } | |

As shown in Table 5, the sequence parameter set (seq_parameter_set_rbsp) may include sps_mrl_enabled_flag. sps_mrl_enabled_flag is used to control whether to enable MRL for the current sequence. For example, when sps_mrl_enabled_flag is set to 1, MRL is controlled to be enabled for the current sequence; or when sps_mrl_enabled_flag is set to 0, MRL is controlled to be disabled for the current sequence.
2. sps_tmrl_enabled_flag.

**Table 6**

| | |
|---|---|
| seq _parameter_set_rbsp( ) { | **Descriptor** |
| ... ... | |
| **sps_mrl enabled _flag** | u(1) |
| if( sps_mrl_enabled_flag) { | |
| **sps_tmrl enabled flag** | u(1) |
| } | |
| ... ... | |
| } | |

As shown in Table 6, the sequence parameter set (seq_parameter_set_rbsp) includes sps_mrl_enabled_flag and sps_tmrl_enabled_flag.

In which, sps_mrl_enabled_flag is used to control whether to enable MRL for the current sequence. For example, when sps_mrl_enabled_flag is set to 1, MRL is controlled to be enabled for the current sequence; or when sps_mrl_enabled_flag is set to 0, MRL is controlled to be disabled for the current sequence.

In which, sps_tmrl_enabled_flag indicates whether the current sequence is allowed to use the TMRL mode. For example, when sps_tmrl_enabled_flag is set to 1, it indicates that the current sequence is allowed to use the TMRL mode; or when sps_tmrl_enabled_flag is set to 0, it indicates that the current sequence is not allowed to use the TMRL mode.

Further, there is a dependency relationship between sps_mrl_enabled_flag and sps_tmrl_enabled_flag. That is, if the current sequence is allowed to use the MRL mode (for example, sps_mrl_enabled_flag is set o 1), the decoder decodes the bitstream to obtain sps_tmrl_enabled_flag.

**Table 7**

| | |
|---|---|
| seq parameter set rbsp( ) { | **Descriptor** |
| ...... | |
| **sps_mrl_enabled_flag** | u(1) |
| **sps_tmrl enabled _flag** | u(1) |
| ... ... | |
| } | |

As shown in Table 7, there may also be no dependency relationship between sps_mrl_enabled_flag and sps_tmrl_enabled_flag, that is, the decoder decodes the bitstream to obtain sps_mrl_enabled_flag and sps_tmrl_enabled_flag.

When sps_mrl_enabled_flag and sps_tmrl_enabled_flag are introduced, CU-level syntax element changes are shown in Table 8 below.

**Table 8**

| | |
|---|---|
| coding_unit (x0,y0,cbWidth,cbHeight,cqtDepth,treeType,modeType) { | **Descriptor** |
| ... ... | |
| if(((y0%CtbSizeY)>0) // not the first line of a current CTU | |
| && !dimd // not the dimd mode | |
| && !bdpcmMode // not the bdpcm mode | |
| && isLuma // it is a luma block | |
| ) { | |
| if(sps_tmrl_enabled_flag // sequence-level tmrl allowed | |
| && !timd // not the timd mode | |
| ) { | |
| **cu_tmrl flag** // whether it is the tmrl mode | ae(v) |
| if(cu tmrl _flag) | |
| **tmrl_list idx** // tmrl candidate list index | ae(v) |
| } | |
| else if(sps_mrl_enabled_flag && !cu _tmrl_flag) { | |
| if(timd) | |
| **intra_luma ref idx** // mrl index in the timd mode | ae(v) |
| else | |
| **intra_luma ref idx** // mrl index in a non-timd mode | ae(v) |
| } | |
| } | |
| ...... // other syntax elements | |

As shown in Table 8, when sps_mrl_enabled_flag and sps_tmrl_enabled_flag are introduced, and if the current block is not the first line of the current CTU, the current block does not use the DIMD mode, the current block does not use a BDPCM mode, and the current block is a luma block, the decoder continues to decode the bitstream based on sps_tmrl_enabled_flag.

In this embodiment, sps_tmrl_enabled_flag is used to indicate switching between TMRL and MRL.

If sps_tmrl_enabled_flag indicates that the current sequence is allowed to use the TMRL mode (for example, the value of the sps_tmrl_enabled_flag is 1) and the current block does not use the TIMD mode, the decoder decodes the bitstream to obtain cu_tmrl_flag. If cu_tmrl_flag indicates that the current block uses the TMRL mode (for example, cu_tmrl_flag is set to 1), the decoder decodes the bitstream to obtain tmrl_list_idx, determines a reference line and a prediction mode included in a combination indicated by tmrl_list_idx in the TMRL mode list as the reference line used by the current block and the prediction mode used by the current block. Then, the decoder performs prediction on the current block based on the reference line used by the current block and by using the prediction mode used by the current block, to obtain a prediction block.

If sps_tmrl_enabled_flag indicates that the current sequence to which the current block belongs is not allowed to use the TMRL mode (for example, the value of sps_tmrl_enabled_flag is 0) or the current block uses the TIMD mode, or cu_tmrl_flag indicates that the current block does not use the TMRL mode (for example, cu_tmrl_flag is set to 0), and further, if sps_mrl_enabled_flag indicates that the current sequence is allowed to use the MRL mode (for example, the value of sps_mrl_enabled_flag is 1) and the current block does not use the TMRL mode, the decoder determines, based on whether the current block uses the TIMD mode, the reference line used by the current block. For example, if the current block uses the TIMD mode, the decoder decodes the bitstream to obtain intra_luma_ref_idx, where intra_luma_ref_idx indicates a reference line used when the current block uses the TIMD mode; or if the current block does not use the TIMD mode, the decoder decodes the bitstream to obtain intra_luma_ref_idx, where intra_luma_ref_idx indicates a reference line used when the current block does not use the TIMD mode.

### 3. gci_no_mrl_constraint_flag and gci_no_tmrl_constraint_flag.

GCI includes a series of flags, and is used to restrict whether some sequence-level flags exist in the bitstream. When GCI of a specific flag is greater than 0, it means that the specific flag in the bitstream is restricted. For example, when GCI is greater than 0, a specific encoding tool is restricted in the bitstream; and when GCI is equal to 0, it means that no restriction is imposed on a part of the bitstream (for example, a specific encoding tool). For example, in a standard text, gci_no_mrl_constraint_flag indicates whether sps_mrl_enabled_flag is restricted; and when gci_no_mrl_constraint_flag is equal to 1, sps_mrl_enabled_flag must be equal to 0; otherwise, the value of sps_mrl_enabled_flag is not restricted.

Due to introduction of a TMRL tool, MRL is enhanced. For use of TMRL and MRL, this application introduces a sequence-level flag sps_tmrl_enabled_flag indicating switching between modes. In this case, GCI may also be adjusted accordingly. For example, when decoding of sps_tmrl_enabled_flag does not depend on the value of sps_mrl_enabled_flag, a tmrl GCI flag may be added. For example, adjustment may be performed in a manner shown in the following Table 9.

**Table 9**

| | |
|---|---|
| general_constraints_info( ) { | **Descriptor** |
| **gci_present_flag** | u(1) |
| if( gci_present_flag) { | |
| ... ... | |
| /* intra */ | |
| ... ... | |
| **gci_no_mrl_constraint_flag** | u(1) |
| **gci_no_tmrl_constraint_flag** | u(1) |
| ... ... | |
| /* inter */ | |
| ...... | |
| /* transform, quantization, residual */ | |
| ... ... | |
| /* loop filter */ | |
| ... ... | |
| } | |
| while( !byte_aligned()) | |
| **gci_alignment_zero_bit** | f(1) |
| } | |

As shown in Table 9, gci_no_mrl_constraint_flag indicates whether sps_mrl_enabled_flag is restricted; and when gci_no_mrl_constraint_flag is equal to 1, sps_mrl_enabled_flag must be equal to 0; otherwise, the value of sps_mrl_enabled_flag is not restricted.

In addition, a flag gci_no_tmrl_constraint_flag may be added to restrict the value of sps_tmrl_enabled_flag. In which, gci_no_tmrl_constraint_flag indicates whether sps_tmrl_enabled_flag is restricted; and when gci_no_tmrl_constraint_flag is equal to 1, sps_tmrl_enabled_flag must be equal to 0; otherwise, the value of sps_tmrl_enabled_flag is not restricted.

Certainly, in another alternative embodiment, when decoding of sps_tmrl_enabled_flag depends on the value of sps_mrl_enabled_flag, gci_no_mrl_constraints_flag may still be used to control both sps_mrl_enabled_flag and sps_tmrl_enabled_flag. This is not specifically limited in this application.

### 4. sps_tm_enabled_flag and gci_no_tm_constraints_flag.

There are a large number of template-based technologies in the ECM, for example, DIMD in the prediction mode. TIMD also uses templates as prediction tools. This application may introduce a unified flag to control all template-based technologies. That is, a sequence-level flag sps_tm_enabled_flag may be introduced to control whether a template-based coding tool is enabled at a sequence level, and there may also be a flag gci_no_tm_constraints_flag to control whether a restriction is imposed on sps_tm_enabled_flag in the bitstream. If gci_no_tm_constraints_flag is equal to 1, sps_tm_enabled_flag must be equal to 0. Otherwise, the value of sps_tm_enabled_flag is not restricted.

In this case, decoding of sps_tmrl_enabled_flag depends on the value of sps_tm_enabled_flag.

**Table 10**

| | |
|---|---|
| general_constraints_info( ) { | **Descriptor** |
| **gci_present_flag** | u(1) |
| if( gci_present_flag) { | |
| gci_no_tm_constraint_flag | u(1) |
| ...... | |
| } | |
| while( !byte_aligned( ) ) | |
| **gci_alignment_zero_bit** | f(1) |
| } | |

As shown in Table 10, the decoder decodes the bitstream to obtain gci_no_tm_constraints_flag; and if gci_no_tm_constraints_flag is equal to 1, sps_tm_enabled_flag must be equal to 0; otherwise, the value of sps_tm_enabled_flag is not restricted.

**Table 11**

| | |
|---|---|
| seq_parameter_set_rbsp( ) { | **Descriptor** |
| ... ... | |
| **sps_tm_enabled_flag** | u(1) |
| ... ... | |
| s**ps_mrl_enabled_flag** | u(1) |
| if(sps_tm_enabled_flag) { | |
| **sps_tmrl_enabled_flag** | u(1) |
| } | |
| ... ... | |
| } | |

As shown in Table 11, the decoder decodes the bitstream to obtain sps_tm_enabled_flag and sps_mrl_enabled_flag; and if the current sequence is allowed to use a template-based mode (for example, sps_tm_enabled_flag is set to 1), the decoder decodes the bitstream to obtain sps_tmrl_enabled_flag.

**Table 12**

| | |
|---|---|
| seq_parameter_set_rbsp( ) { | **Descriptor** |
| ...... | |
| **sps_tm_enabled_flag** | u(1) |
| ...... | |
| **sps_mrl_enabled_flag** | u(1) |
| if(sps_tm_enabled_flag && sps_mrl_enabled_flag) { | |
| **sps_tmrl_enabled_flag** | u(1) |
| } | |
| ...... | |
| } | |

As shown in Table 12, the decoder decodes the bitstream to obtain sps_tm_enabled_flag and sps_mrl_enabled_flag; and if the current sequence is allowed to use the template-based mode (for example, sps_tm_enabled_flag is set to 1) and the current sequence is allowed to use the MRL mode (for example, sps_mrl_enabled_flag is set to 1), the decoder decodes the bitstream to obtain sps_tmrl_enabled_flag.

Because the MRL tool being enabled indicates that there are non-adjacent reference lines allowed to be used, sps_mrl_enabled_flag can be expanded to indicate a quantity of non-adjacent reference lines that can be used (that is, the maximum line quantity mentioned above). After the maximum line quantity is introduced, implementation of CU-level syntax elements needs to be adjusted accordingly under different sequence parameter sets. The following exemplarily describes an adjustment method thereof.

### Method 1:

The sequence parameter set (seq_parameter_set_rbsp) may be as shown in Table 13 below.

**Table 13**

| | |
|---|---|
| seq _parameter_set_rbsp() { | **Descriptor** |
| ... ... | |
| **sps_mrl_enabled_flag** | u(3) |
| if (sps_mrl_enabled_flag > **n** ) | |
| **sps_tmrl_enabled_flag** | u(1) |
| ... ... | |
| } | |

As shown in Table 13, the sequence parameter set includes sps_mrl_enabled_flag and sps_tmrl_enabled_flag.

A value of sps_mrl_enabled_flag ranges from 0 to x (x is a positive integer). When a value of sps_mrl_enabled_flag is 0, it indicates that the sequence-level MRL is disabled. When the value of sps_mrl_enabled_flag ranges from 1 to x, it indicates that the current sequence uses the MRL mode and indicates the maximum line quantity. For example, when the value of sps_mrl_enabled_flag is i (1 ≤ i ≤ x), it indicates that the current sequence uses the MRL mode and indicates that the maximum line quantity is a value determined according to i. When sps_mrl_enabled_flag does not exist in the bitstream, sps_mrl_enabled_flag is 0 by default.

For example, if a maximum value of sps_mrl_enabled_flag is 5,
when sps_mrl_enabled_flag is set to 0, it indicates that the current sequence does not use the MRL mode; when sps_mrl_enabled_flag is 1, the following content is indicated: the current sequence uses the MRL mode, the maximum line quantity is 1, and the reference line allowed to be used by the current block is a reference line 1; when sps_mrl_enabled_flag is 2, the following content is indicated: the current sequence uses the MRL mode, the maximum line quantity is 2, and reference lines allowed to be used by the current block include reference lines 1 and 3; when sps_mrl_enabled_flag is 3, the following content is indicated: the current sequence uses the MRL mode, the maximum line quantity is 3, and reference lines allowed to be used by the current block include reference lines 1, 3, and 5; when sps_mrl_enabled_flag is 4, the following content is indicated: the current sequence uses the MRL mode, the maximum line quantity is 4, and reference lines allowed to be used by the current block include reference lines 1, 3, 5, and 7; or when sps_mrl_enabled_flag is 5, the following content is indicated: the current sequence uses the MRL mode, the maximum line quantity is 5, and reference lines allowed to be used by the current block include reference lines 1, 3, 5, 7, and 12.

In which, sps_tmrl_enabled_flag indicates whether the current sequence is allowed to use the TMRL mode. For example, when sps_tmrl_enabled_flag is set to 1, it indicates that the current sequence is allowed to use the TMRL mode, or when sps_tmrl_enabled_flag is set to 0, it indicates that the current sequence is not allowed to use the TMRL mode. When sps_tmrl_enabled_flag does not exist in the bitstream, sps_tmrl_enabled_flag is 0 by default.

There is a dependency relationship between sps_mrl_enabled_flag and sps_tmrl_enabled_flag, that is, if sps_mrl_enabled_flag > n (for example, n is 1), the decoder decodes the bitstream to obtain sps_tmrl_enabled_flag.

Based on the sequence parameter set shown in Table 13, implementation of CU-level syntax elements may be shown in Table 14 below.

**Table 14**

| | |
|---|---|
| coding_unit (x0,y0,cbWidth,cbHeight,cqtDepth,treeType,modeType) { | **Descriptor** |
| ... ... | |
| if(((y0%CtbSizeY)>0) // not the first line of a current CTU && !dimd // not the dimd mode && !bdpcmMode // not the bdpcm mode && isLuma // it is a luma block ) { | |
| if(sps_tmrl_enabled_flag // sequence-level tmrl allowed && !timd // not the timd mode ) { | |
| **cu_tmrl_flag** // whether it is the tmrl mode | ae(v) |
| if(cu_tmrl_flag) | |
| **tmrl_list_idx** // tmrl candidate list index | ae(v) |
| } | |
| else if(sps_mrl_enabled_flag && !cu_tmrl_flag) { | |
| if(timd) | |
| **intra_luma_ref_idx** // mrl index in the timd mode | ae(v) |
| else | |
| **intra_luma_ref_idx** // mrl index in a non-timd mode | ae(v) |
| } | |
| } | |
| ...... // other syntax elements | |

As shown in Table 14, when a syntax element of the maximum line quantity is introduced, and if the current block is not the first line of the current CTU, the current block does not use DIMD mode, the current block does not use BDPCM mode, and the current block is a luma block, the decoder continues to decode the bitstream based on sps_tmrl_enabled_flag.

In this embodiment, sps_tmrl_enabled_flag is used to indicate switching between TMRL and MRL.

If sps_tmrl_enabled_flag indicates that the current sequence is allowed to use the TMRL mode (for example, the value of the sps_tmrl_enabled_flag is 1) and the current block does not use the TIMD mode, the decoder decodes the bitstream to obtain cu_tmrl_flag. If cu_tmrl_flag indicates that the current block uses the TMRL mode (for example, cu_tmrl_flag is set to 1), the decoder decodes the bitstream to obtain tmrl_list_idx, determines a reference line and a prediction mode included in a combination indicated by tmrl_list_idx in the TMRL mode list as the reference line used by the current block and the prediction mode used by the current block. Then, the decoder performs prediction on the current block based on the reference line used by the current block and by using the prediction mode used by the current block, to obtain a prediction block.

If sps_tmrl_enabled_flag indicates that the current sequence to which the current block belongs is not allowed to use the TMRL mode (for example, the value of sps_tmrl_enabled_flag is 0) or the current block uses the TIMD mode, or cu_tmrl_flag indicates that the current block does not use the TMRL mode (for example, cu_tmrl_flag is set to 0), and further, if sps_mrl_enabled_flag indicates that the current sequence is allowed to use the MRL mode (for example, the value of sps_mrl_enabled_flag is 1) and the current block does not use the TMRL mode, the decoder determines, based on whether the current block uses the TIMD mode, the reference line used by the current block. For example, if the current block uses the TIMD mode, the decoder decodes the bitstream to obtain intra_luma_ref_idx, where intra_luma_ref_idx indicates a reference line used when the current block uses the TIMD mode. If the current block does not use the TIMD mode, the decoder decodes the bitstream to obtain intra_luma_ref_idx, where intra_luma_ref_idx indicates a reference line used when the current block does not use the TIMD mode.

### Method 2:

The sequence parameter set (seq_parameter_set_rbsp) may be as shown in Table 15 below.

**Table 15**

| | |
|---|---|
| seq_parameter_set_rbsp() { | **Descriptor** |
| ... ... | |
| **sps_mrl_enabled_flag** | u(3) |
| **sps_tmrl_enabled_flag** | u(1) |
| **......** | |
| } | |

As shown in Table 13, the sequence parameter set includes sps_mrl_enabled_flag and sps_tmrl_enabled_flag.

A value of sps_mrl_enabled_flag ranges from 0 to x (x is a positive integer). When a value of sps_mrl_enabled_flag is 0, it indicates that the sequence-level MRL is disabled. When the value of sps_mrl_enabled_flag is 1 to x, it indicates that the current sequence uses the MRL mode and indicates the maximum line quantity. For example, when the value of sps_mrl_enabled_flag is i (1 ≤ i ≤ x), it indicates that the current sequence uses the MRL mode and indicates that the maximum line quantity is a value determined according to i. When sps_mrl_enabled_flag does not exist in the bitstream, sps_mrl_enabled_flag is 0 by default.

For example, if a maximum value of sps_mrl_enabled_flag is 5,
when sps_mrl_enabled_flag is set to 0, it indicates that the current sequence does not use the MRL mode; when sps_mrl_enabled_flag is 1, the following content is indicated: the current sequence uses the MRL mode, the maximum line quantity is 1, and the reference line allowed to be used by the current block is a reference line 1; when sps_mrl_enabled_flag is 2, the following content is indicated: the current sequence uses the MRL mode, the maximum line quantity is 2, and reference lines allowed to be used by the current block include reference lines 1 and 3; when sps_mrl_enabled_flag is 3, the following content is indicated: the current sequence uses the MRL mode, the maximum line quantity is 3, and reference lines allowed to be used by the current block include reference lines 1, 3, and 5; when sps_mrl_enabled_flag is 4, the following content is indicated: the current sequence uses the MRL mode, the maximum line quantity is 4, and reference lines allowed to be used by the current block include reference lines 1, 3, 5, and 7; or when sps_mrl_enabled_flag is 5, the following content is indicated: the current sequence uses the MRL mode, the maximum line quantity is 5, and reference lines allowed to be used by the current block include reference lines 1, 3, 5, 7, and 12.

In which, sps_tmrl_enabled_flag indicates whether the current sequence is allowed to use the TMRL mode. For example, when sps_tmrl_enabled_flag is set to 1, it indicates that the current sequence is allowed to use the TMRL mode; or when sps_tmrl_enabled_flag is set to 0, it indicates that the current sequence is not allowed to use the TMRL mode. When sps_tmrl_enabled_flag does not exist in the bitstream, sps_tmrl_enabled_flag is 0 by default.

There may be no dependency relationship between sps_mrl_enabled_flag and sps_tmrl_enabled_flag, that is, the decoder decodes the bitstream to obtain sps_mrl_enabled_flag and sps_tmrl_enabled_flag.

Based on the sequence parameter set shown in Table 15, implementation of CU-level syntax elements may be shown in Table 16 below:

**Table 16**

| | |
|---|---|
| codine_unit (x0,y0,cbWidth,cbHeight,cqtDepth,treeType,modeType) { | **Descriptor** |
| ... ... | |
| if(((y0%CtbSizeY)>0) // not the first line of a current CTU && !dimd // not the dimd mode && !bdpcmMode // not the bdpcm mode && isLuma // it is a luma block ) { | |
| if(sps_tmrl_enabled_flag // sequence-level tmrl allowed && !timd // not the timd mode && num_non_adjacent_ref_line > n ) { | |
| **cu_tmrl_flag** // whether it is the tmrl mode | ae(v) |
| if(cu_tmrl_flag) | |
| **tmrl_list_idx** // tmrl candidate list index | ae(v) |
| } | |
| else if(sps_mrl_enabled_flag && !cu_tmrl_flag) { | |
| if(timd) | |
| **intra_luma_ref_idx** // mrl index in the timd mode | ae(v) |
| else | |
| **intra_luma_ref_idx** // mrl index in a non-timd mode | ae(v) |
| } | |
| } | |
| ...... // other syntax elements | |

As shown in Table 16, when a syntax element of the maximum line quantity is introduced, and if the current block is not the first line of the current CTU, the current block does not use DIMD mode, the current block does not use BDPCM mode, and the current block is a luma block, the decoder continues to decode the bitstream based on sps_tmrl_enabled_flag.

In this embodiment, sps_tmrl_enabled_flag is used to indicate switching between TMRL and MRL.

If sps_tmrl_enabled_flag indicates that the current sequence is allowed to use the TMRL mode (for example, the value of the sps_tmrl_enabled_flag is 1), the current block does not use the TIMD mode, and num_non_adjacent_ref_line > n (for example, n is 1), the decoder decodes the bitstream to obtain cu_tmrl_flag. If cu_tmrl_flag indicates that the current block uses the TMRL mode (for example, cu_tmrl_flag is set to 1), the decoder decodes the bitstream to obtain tmrl_list_idx, determines a reference line and a prediction mode included in a combination indicated by tmrl_list_idx in the TMRL mode list as the reference line used by the current block and the prediction mode used by the current block. Then, the decoder performs prediction on the current block based on the reference line used by the current block and by using the prediction mode used by the current block, to obtain a prediction block.

The num_non_adjacent_ref_line variable is equal to the value of sps_mrl_enabled_flag, which is used to indicate the maximum line quantity.

If sps_tmrl_enabled_flag indicates that the current sequence to which the current block belongs is not allowed to use the TMRL mode (for example, the value of sps_tmrl_enabled_flag is 0) or the current block uses the TIMD mode, or cu_tmrl_flag indicates that the current block does not use the TMRL mode (for example, cu_tmrl_flag is set to 0), and further, if sps_mrl_enabled_flag indicates that the current sequence is allowed to use the MRL mode (for example, the value of sps_mrl_enabled_flag is 1) and the current block does not use the TMRL mode, the decoder determines, based on whether the current block uses the TIMD mode, the reference line used by the current block. For example, if the current block uses the TIMD mode, the decoder decodes the bitstream to obtain intra_luma_ref_idx, where intra_luma_ref_idx indicates a reference line used when the current block uses the TIMD mode; or if the current block does not use the TIMD mode, the decoder decodes the bitstream to obtain intra_luma_ref_idx, where intra_luma_ref_idx indicates a reference line used when the current block does not use the TIMD mode.

### Method 3:

The sequence parameter set (seq_parameter_set_rbsp) may be as shown in Table 17 below.

**Table 17**

| | |
|---|---|
| seq _parameter_set_rbsp() { | **Descriptor** |
| ... ... | |
| **num_non _adjacent ref line** | u(3) |
| **sps_mrl_enabled_flag** | u(1) |
| **sps_tmrl_enabled_flag** | u(1) |
| ... ... | |
| } | |

As shown in Table 17, sps_mrl_enabled_flag is still just a sequence-level flag only used for controlling whether to enable MRL for the current sequence. For example, when sps_mrl_enabled_flag is set to 1, MRL is controlled to be enabled for the current sequence; or when sps_mrl_enabled_flag is set to 0, MRL is controlled to be disabled for the current sequence.

In which, num_non_adjacent_ref_line is used to indicate the maximum line quantity. For example, in the ECM, a value of num_non_adjacent_ref_line may range from 0 to 5, which may be represented by a 3-bit fixed-length code "u(3)". Certainly, when num_non_adjacent_ref_line does not exist in the bitstream, the value of the num_non_adjacent_ref_line may be 0 by default.

Based on the sequence parameter set shown in Table 17, implementation of CU-level syntax elements may be shown in Table 18 below.

**Table 18**

| | |
|---|---|
| coding_unit (x0,y0,cbWidth,cbHeight,cqtDepth,treeType,modeType) { | **Descriptor** |
| ... ... | |
| if(((y0%CtbSizeY)>0) // not the first line of a current CTU && !dimd // not the dimd mode && !bdpcmMode // not the bdpcm mode && isLuma // it is a luma block ) { | |
| if(sps_tmrl_enabled_flag // sequence-level tmrl allowed && !timd // not the timd mode && num_non_adjacent_ref_line > n ) { | |
| **cu_tmrl_flag** // whether it is the tmrl mode | ae(v) |
| if(cu_tmrl_flag) | |
| **tmrl_list idx** // tmrl candidate list index | ae(v) |
| } | |
| else if(sps_mrl_enabled_flag && num_non_adjacent_ref_line > m | |
| && !cu_tmrl_flag) { | |
| if(timd) | |
| **intra_luma ref idx** // mrl index in the timd mode | ae(v) |
| else | |
| **intra_luma ref idx** // mrl index in a non-timd mode | ae(v) |
| } | |
| } | |
| ...... // other syntax elements | |

As shown in Table 18, when a syntax element of the maximum line quantity is introduced, and if the current block is not the first line of the current CTU, the current block does not use DIMD mode, the current block does not use BDPCM mode, and the current block is a luma block, the decoder continues to decode the bitstream based on sps_tmrl_enabled_flag.

In this embodiment, sps_tmrl_enabled_flag is used to indicate switching between TMRL and MRL.

If sps_tmrl_enabled_flag indicates that the current sequence is allowed to use the TMRL mode (for example, the value of the sps_tmrl_enabled_flag is 1), the current block does not use the TIMD mode, and num_non_adjacent_ref_line > n (for example, n is 1), the decoder decodes the bitstream to obtain cu_tmrl_flag. If cu_tmrl_flag indicates that the current block uses the TMRL mode (for example, cu_tmrl_flag is set to 1), the decoder decodes the bitstream to obtain tmrl_list_idx, determines a reference line and a prediction mode included in a combination indicated by tmrl_list_idx in the TMRL mode list as the reference line used by the current block and the prediction mode used by the current block. Then, the decoder performs prediction on the current block based on the reference line used by the current block and by using the prediction mode used by the current block, to obtain a prediction block.

The num_non_adjacent_ref_line variable is equal to the value of sps_mrl_enabled_flag, which is used to indicate the maximum line quantity.

If sps_tmrl_enabled_flag indicates that the current sequence to which the current block belongs is not allowed to use the TMRL mode (for example, the value of sps_tmrl_enabled_flag is 0) or the current block uses the TIMD mode, or cu_tmrl_flag indicates that the current block does not use the TMRL mode (for example, cu_tmrl_flag is set to 0), and further, if sps_mrl_enabled_flag indicates that the current sequence is allowed to use the MRL mode (for example, the value of sps_mrl_enabled_flag is 1), num_non_adjacent_ref_line > m (for example, m is 0), and the current block does not use the TMRL mode, the decoder determines, based on whether the current block uses the TIMD mode, the reference line used by the current block. For example, if the current block uses the TIMD mode, the decoder decodes the bitstream to obtain intra_luma_ref_idx, where intra_luma_ref_idx indicates a reference line used when the current block uses the TIMD mode. If the current block does not use the TIMD mode, the decoder decodes the bitstream to obtain intra_luma_ref_idx, where intra_luma_ref_idx indicates a reference line used when the current block does not use the TIMD mode.

Because there is no dependency relationship between num_non_adjacent_ref_line and sps_mrl_enabled_flag and no dependency relationship between num_non_adjacent_ref_line and sps_tmrl_enabled_flag, it is necessary to determine, based on num_non_adjacent_ref_line, whether to decode the image block-level flag.

### Method 4:

The sequence parameter set (seq_parameter_set_rbsp) may be as shown in Table 19 below.

**Table 19**

| | |
|---|---|
| seq _parameter_set_rbsp() { | **Descriptor** |
| ... ... | |
| **num_non_adjacent _ref _line** | u(3) |
| if (num_non_adjacent _ref_line > m) | u(1) |
| **sps_mrl_enabled_flag** | |
| if (num_non_adjacent _ref_line > n ) | |
| **sps_tmrl_enabled_flag** | |
| ...... | |
| } | |

As shown in Table 19, sps_mrl_enabled_flag is still just a sequence-level flag only used for controlling whether to enable MRL for the current sequence. For example, when sps_mrl_enabled_flag is set to 1, MRL is controlled to be enabled for the current sequence; or when sps_mrl_enabled_flag is set to 0, MRL is controlled to be disabled for the current sequence. A new syntax num_non_adjacent_ref_line is introduced, and used to indicate the maximum line quantity. For example, in the ECM, a value of num_non_adjacent_ref_line may range from 0 to 5, which may be represented by a 3-bit fixed-length code "u(3)". Certainly, when num_non_adjacent_ref_line does not exist in the bitstream, the value of the num_non_adjacent_ref_line may be 0 by default.

In which, sps_mrl_enabled_flag and sps_tmrl_enabled_flag may separately have a dependency relationship with num_non_adjacent_ref_line. If num_non_adjacent_ref_line > m (for example, n is 0), the decoder decodes the bitstream to obtain sps_mrl_enabled_flag. If num_non_adjacent_ref_line > n (for example, n is 1), the decoder decodes the bitstream to obtain sps_tmrl_enabled_flag.

Based on the sequence parameter set shown in Table 19, implementation of CU-level syntax elements may be shown in Table 20 below:

**Table 20**

| | |
|---|---|
| coding_unit (x0,y0,cbWidth,cbHeight,cqtDepth,treeType,modeType) { | **Descriptor** |
| ... ... | |
| if(((y0%CtbSizeY)>0) // not the first line of a current CTU && !dimd // not the dimd mode && !bdpcmMode // not the bdpcm mode && isLuma // it is a luma block ) { | |
| if(sps_tmrl_enabled_flag // sequence-level tmrl allowed && !timd // not the timd mode ) { | |
| **cu_tmrl_flag** // whether it is the tmrl mode | ae(v) |
| if(cu tmrl _flag) | |
| **tmrl_list idx** // tmrl candidate list index | ae(v) |
| } | |
| else if(sps_mrl_enabled_flag && !cu_tmrl_flag) { | |
| if(timd) | |
| **intra_luma ref idx** // mrl index in the timd mode | ae(v) |
| else | |
| **intra_luma ref idx** // mrl index in a non-timd mode | ae(v) |
| } | |
| } | |
| ...... // other syntax elements | |

As shown in Table 20, when a syntax element of the maximum line quantity is introduced, and if the current block is not the first line of the current CTU, the current block does not use DIMD mode, the current block does not use BDPCM mode, and the current block is a luma block, the decoder continues to decode the bitstream based on sps_tmrl_enabled_flag.

In this embodiment, sps_tmrl_enabled_flag is used to indicate switching between TMRL and MRL.

If sps_tmrl_enabled_flag indicates that the current sequence is allowed to use the TMRL mode (for example, the value of the sps_tmrl_enabled_flag is 1) and the current block does not use the TIMD mode, the decoder decodes the bitstream to obtain cu_tmrl_flag. If cu_tmrl_flag indicates that the current block uses the TMRL mode (for example, cu_tmrl_flag is set to 1), the decoder decodes the bitstream to obtain tmrl_list_idx, determines a reference line and a prediction mode included in a combination indicated by tmrl_list_idx in the TMRL mode list as the reference line used by the current block and the prediction mode used by the current block. Then, the decoder performs prediction on the current block based on the reference line used by the current block and by using the prediction mode used by the current block, to obtain a prediction block.

If sps_tmrl_enabled_flag indicates that the current sequence to which the current block belongs is not allowed to use the TMRL mode (for example, the value of sps_tmrl_enabled_flag is 0) or the current block uses the TIMD mode, or cu_tmrl_flag indicates that the current block does not use the TMRL mode (for example, cu_tmrl_flag is set to 0). and further, if sps_mrl_enabled_flag indicates that the current sequence is allowed to use the MRL mode (for example, the value of sps_mrl_enabled_flag is 1) and the current block does not use the TMRL mode, the decoder determines, based on whether the current block uses the TIMD mode, the reference line used by the current block. For example, if the current block uses the TIMD mode, the decoder decodes the bitstream to obtain intra_luma_ref_idx, where intra_luma_ref_idx indicates a reference line used when the current block uses the TIMD mode. If the current block does not use the TIMD mode, the decoder decodes the bitstream to obtain intra_luma_ref_idx, where intra_luma_ref_idx indicates a reference line used when the current block does not use the TIMD mode.

It should be understood that the foregoing implementation of CU-level syntax elements under the sequence parameter set is merely an example of this application, and shall not be understood as a limitation on this application. For example, in another alternative embodiment, a parsing condition of cu_tmrl_flag, intra_luma_ref_idx, or a parsing condition of the intra_luma_ref_idx may be constructed based on flags in the sequence parameter set according to an actual requirement, which is not specifically limited in this application. In addition, as described above, when a value of a flag is 1, the current sequence is controlled or indicated to use a specific technology or mode; or when a value of a flag is 0, the current sequence is controlled or indicated not to use a specific technology or mode. In another alternative embodiment, when a value of a flag is 0, the current sequence may be controlled or indicated to use a specific technology or mode; or when a value of a flag is 1, the current sequence may be controlled or indicated not to use a specific technology or mode. This is not specifically limited in this application.

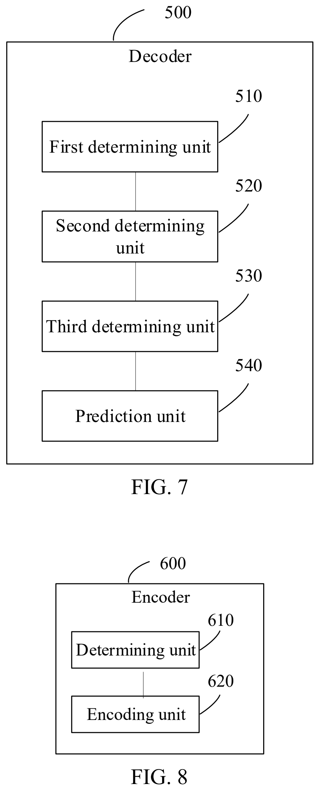

The foregoing describes in detail the decoding method according to the embodiment of this application from a perspective of a decoder. The following describes an encoding method according to an embodiment of this application from a perspective of an encoder with reference to FIG. 7.

FIG. 6 is a schematic flowchart of an encoding method 400 according to an embodiment of this application. It should be understood that the encoding method 400 may be executed by an encoder, which is applied, for example, to the encoding framework 100 shown in FIG. 1.

As shown in FIG. 6, the encoding method 400 may include the following steps S410 and S420.

S410: a maximum line quantity of reference lines allowed to be used by a current block is determined.

S420: the maximum line quantity is encoded.

In some embodiments, S410 may include:
encoding a first flag,
where a value of the first flag being a first value indicates that a current sequence to which the current block belongs does not use a multiple reference line MRL mode; or the value of the first flag being a second value other than the first value indicates that the current sequence uses the MRL mode and indicates the maximum line quantity.

In some embodiments, S410 may include:
encoding a second flag,
where the second flag indicates the maximum line quantity.

In some embodiments, the method 400 may further include:
if the maximum line quantity is greater than a first preset threshold, encoding a third flag; and
if the third flag indicates that the current sequence allows a template-based multiple reference line TMRL mode, encoding a fourth flag,
where the fourth flag indicates whether the current block uses the TMRL mode.

In some embodiments, if the third flag indicates that the current sequence is allowed to use the TMRL mode and the current block does not use a template-based intra mode derivation TIMD mode, the fourth flag is encoded.

In some embodiments, the method 400 may further include:
encoding a third flag; and
if the third flag indicates that the current sequence allows a template-based multiple reference line TMRL mode and the maximum line quantity is greater than a first preset threshold, encoding a fourth flag,
where the fourth flag indicates whether the current block uses the TMRL mode.

In some embodiments, if the third flag indicates that the current sequence is allowed to use the TMRL mode, the maximum line quantity is greater than the first preset threshold, and the current block does not use a template-based intra mode derivation TIMD mode, the fourth flag is encoded.

In some embodiments, if the current sequence is allowed to use the multiple reference line MRL mode, the third flag is encoded.

In some embodiments, a fifth flag is encoded; and if the fifth flag indicates that a value of the third flag is not restricted or the fifth flag does not restrict a value of a flag used for indicating whether the current sequence is allowed to use the multiple reference line MRL mode, the third flag is encoded.

In some embodiments, a sixth flag is encoded; and if the sixth flag indicates that the current sequence is allowed to use a template-based mode, the third flag is encoded.

In some embodiments, a seventh flag is encoded; and if the seventh flag indicates that a value of the sixth flag is not restricted, the sixth flag is encoded.

In some embodiments, the method 400 may further include:
determining a reference line corresponding to the maximum line quantity as a reference line allowed to be used by the current block;
constructing a TMRL mode list based on the reference line allowed to be used by the current block and a prediction mode allowed to be used by the current block; and
encoding a first index,
where a reference line and a prediction mode that are included in a combination indicated by the first index in the TMRL mode list are the reference line used by the current block and the prediction mode used by the current block.

In some embodiments, for each of at least one combination obtained by using the reference line allowed to be used by the current block and the prediction mode allowed to be used by the current block, a template of the current block is predicted based on a reference line of the combination and by using a prediction mode of the combination, to obtain a prediction cost of each combination; based on the prediction cost of each combination, the at least one combination is ranked in an ascending order of prediction costs, to obtain a ranked combination; and a combination ranked high in the ranked combination is determined as a combination in the TMRL mode list.

In some embodiments, the method 400 may further include:
determining, based on whether the current block uses the template-based intra mode derivation TIMD mode, the reference line used by the current block, if the current block does not use the template-based multiple reference line TMRL mode.

In some embodiments, the method 400 may further include:
if the current block uses the TIMD mode, encoding a second index; or
if the current block does not use the TIMD mode, encoding a third index,
   where the second index indicates a reference line used when the current block uses the TIMD mode, and the third index indicates a reference line used when the current block does not use the TIMD mode.

In some embodiments, an eighth flag is encoded; and if the eighth flag indicates that the current sequence to which the current block belongs is allowed to use the multiple reference line MRL mode and the current block does not use the TMRL mode, the reference line used by the current block is determined based on whether the current block uses the TIMD mode.

In some embodiments, if the maximum line quantity is greater than or equal to a second preset threshold, the eighth flag is encoded.

In some embodiments, if the eighth flag indicates that the current sequence is allowed to use the multiple reference line MRL mode, the maximum line quantity is greater than or equal to a second preset threshold, and the current block does not use the TMRL mode, the reference line used by the current block is determined based on whether the current block uses the TIMD mode.

It should be understood that the encoding method may be understood as an inverse process of a decoding method. Therefore, for a specific solution of the encoding method 400, one may refer to the relevant content of the decoding method 300. For ease of description, details are not described again in this application.

The foregoing describes in detail the preferred implementations of this application with reference to the accompanying drawings. However, this application is not limited to specific details in the foregoing implementation. Within a technical concept scope of this application, a plurality of simple variations of the technical solutions of this application may be made, and these simple variations all fall within the protection scope of this application. For example, specific technical features described in the foregoing specific implementations may be combined in any suitable manner without contradiction. To avoid unnecessary repetition, various possible combination manners are not separately described in this application. For another example, any combination of different implementations of this application may be made, provided that the combination is not contrary to the idea of this application, the combination shall also be considered as the content disclosed in this application. It should be further understood that, in the method embodiments of this application, sequence numbers of the foregoing processes related above do not mean execution sequences. The execution sequences of the processes shall be determined according to functions and internal logic of the processes, and shall not be construed as any limitation on the implementation processes of embodiments of this application

The method embodiments of this application are described in detail above. Apparatus embodiments of this application are described below in detail with reference to FIG. 7 to FIG. 9.

FIG. 7 is a schematic block diagram of a decoder 500 according to an embodiment of this application.

As shown in FIG. 7, the decoder 500 may include:
a first determining unit 510, configured to determine a maximum line quantity of reference lines allowed to be used by a current block;
a second determining unit 520, configured to determine, based on the maximum line quantity, whether the current block uses a template-based multiple reference line TMRL mode;
a third determining unit 530, configured to: if the current block uses the TMRL mode, determine a reference line used by the current block and a prediction mode used by the current block; and
a prediction unit 540, configured to perform prediction on the current block based on the reference line used by the current block and by using the prediction mode used by the current block, to obtain a prediction block.

In some embodiments, the first determining unit 510 is specifically configured to:
obtain a first flag,
where a value of the first flag being a first value indicates that a current sequence to which the current block belongs does not use a multiple reference line MRL mode; or the value of the first flag being a second value other than the first value indicates that the current sequence uses the MRL mode and indicates the maximum line quantity.

In some embodiments, the first determining unit 510 is specifically configured to:
obtain a second flag; and
determine a line quantity indicated by the second flag as the maximum line quantity.

In some embodiments, the second determining unit 520 is specifically configured to:
if the maximum line quantity is greater than a first preset threshold, obtain a third flag; and
if the third flag indicates that the current sequence to which the current block belongs is allowed to use the TMRL mode, obtain a fourth flag,
where the fourth flag indicates whether the current block uses the TMRL mode.

In some embodiments, the second determining unit 520 is specifically configured to:
if the third flag indicates that the current sequence is allowed to use the TMRL mode and the current block does not use a template-based intra mode derivation TIMD mode, obtain the fourth flag.

In some embodiments, the second determining unit 520 is specifically configured to:
obtain a third flag; and
if the third flag indicates that the current sequence to which the current block belongs is allowed to use the TMRL mode and the maximum line quantity is greater than a first preset threshold, obtain a fourth flag,
where the fourth flag indicates whether the current block uses the TMRL mode.

In some embodiments, the second determining unit 520 is specifically configured to:
if the third flag indicates that the current sequence is allowed to use the TMRL mode, the maximum line quantity is greater than the first preset threshold, and the current block does not use a template-based intra mode derivation TIMD mode, determine that the current block uses the TMRL mode.

In some embodiments, the second determining unit 520 is specifically configured to:
if the current sequence is allowed to use the multiple reference line MRL mode, obtain the third flag.

In some embodiments, the second determining unit 520 is specifically configured to:
obtain a fifth flag; and
if the fifth flag indicates that a value of the third flag is not restricted or the fifth flag does not restrict a value of a flag used for indicating whether the current sequence is allowed to use the multiple reference line MRL mode, obtain the third flag.

In some embodiments, the second determining unit 520 is specifically configured to:
obtain a sixth flag; and
if the sixth flag indicates that the current sequence is allowed to use a template-based mode, obtain the third flag.

In some embodiments, the second determining unit 520 is specifically configured to:
obtain a seventh flag; and
if the seventh flag indicates that a value of the sixth flag is not restricted, obtain the sixth flag.

In some embodiments, the third determining unit 530 is specifically configured to:
determine a reference line corresponding to the maximum line quantity as a reference line allowed to be used by the current block;
construct a TMRL mode list based on the reference line allowed to be used by the current block and a prediction mode allowed to be used by the current block;
obtain a first index; and
determine a reference line and a prediction mode that are included in a combination indicated by the first index in the TMRL mode list as the reference line used by the current block and the prediction mode used by the current block.

In some embodiments, the third determining unit 530 is specifically configured to:
for each of at least one combination obtained by using the reference line allowed to be used by the current block and the prediction mode allowed to be used by the current block, predict a template of the current block based on a reference line of the combination and by using a prediction mode of the combination, to obtain a prediction cost of each combination;
rank, based on the prediction cost of each combination, the at least one combination in an ascending order of prediction costs, to obtain a ranked combination; and
determine a combination ranked high in the ranked combination as a combination in the TMRL mode list.

In some embodiments, the prediction unit 540 is further configured to:
determine, based on whether the current block uses the TIMD mode, the reference line used by the current block, if the current block does not use the template-based multiple reference line TMRL mode.

In some embodiments, the prediction unit 540 is specifically configured to:
if the current block uses the TIMD mode, obtain a second index; or
if the current block does not use the TIMD mode, obtain a third index,
where the second index indicates a reference line used when the current block uses the TIMD mode, and the third index indicates a reference line used when the current block does not use the TIMD mode.

In some embodiments, the prediction unit 540 is specifically configured to:
obtain an eighth flag; and
if the eighth flag indicates that the current sequence to which the current block belongs is allowed to use the multiple reference line MRL mode and the current block does not use the TMRL mode, determine, based on whether the current block uses the TIMD mode, the reference line used by the current block.

In some embodiments, the prediction unit 540 is specifically configured to:
if the maximum line quantity is greater than or equal to a second preset threshold, obtain the eighth flag.

In some embodiments, the prediction unit 540 is specifically configured to:
if the eighth flag indicates that the current sequence is allowed to use the multiple reference line MRL mode, the maximum line quantity is greater than or equal to a second preset threshold, and the current block does not use the TMRL mode, determine, based on whether the current block uses the TIMD mode, the reference line used by the current block.

FIG. 8 is a schematic block diagram of an encoder 600 according to an embodiment of this application.

As shown in FIG. 8, the encoder 600 may include:
a determining unit 610, configured to determine a maximum line quantity of reference lines allowed to be used by a current block; and
an encoding unit 620, configured to encode the maximum line quantity.

In some embodiments, the determining unit 610 is specifically configured to:
encode a first flag,
where a value of the first flag being a first value indicates that a current sequence to which the current block belongs does not use a multiple reference line MRL mode; or the value of the first flag being a second value other than the first value indicates that the current sequence uses the MRL mode and indicates the maximum line quantity.

In some embodiments, the determining unit 610 is specifically configured to:
encode a second flag,
where the second flag indicates the maximum line quantity.

In some embodiments, the encoding unit 620 is further configured to:
if the maximum line quantity is greater than a first preset threshold, encode a third flag; and
if the third flag indicates that the current sequence is allowed to use a template-based multiple reference line TMRL mode, encode a fourth flag,
where the fourth flag indicates whether the current block uses the TMRL mode.

In some embodiments, the encoding unit 620 is specifically configured to:
if the third flag indicates that the current sequence is allowed to use the TMRL mode and the current block does not use a template-based intra mode derivation TIMD mode, encode the fourth flag.

In some embodiments, the encoding unit 620 is further configured to:
encode a third flag; and
if the third flag indicates that the current sequence is allowed to use a template-based multiple reference line TMRL mode and the maximum line quantity is greater than a first preset threshold, encode a fourth flag,
where the fourth flag indicates whether the current block uses the TMRL mode.

In some embodiments, the encoding unit 620 is specifically configured to:
if the third flag indicates that the current sequence is allowed to use the TMRL mode, the maximum line quantity is greater than the first preset threshold, and the current block does not use a template-based intra mode derivation TIMD mode, encode the fourth flag.

In some embodiments, the encoding unit 620 is specifically configured to:
if the current sequence is allowed to use the multiple reference line MRL mode, encode the third flag.

In some embodiments, the encoding unit 620 is specifically configured to:
encode a fifth flag; and
if the fifth flag indicates that a value of the third flag is not restricted or the fifth flag does not restrict a value of a flag used for indicating whether the current sequence is allowed to use the multiple reference line MRL mode, encode the third flag.

In some embodiments, the encoding unit 620 is specifically configured to:
encode a sixth flag; and
if the sixth flag indicates that the current sequence is allowed to use a template-based mode, encode the third flag.

In some embodiments, the encoding unit 620 is specifically configured to:
encode a seventh flag; and
if the seventh flag indicates that a value of the sixth flag is not restricted, encode the sixth flag.

In some embodiments, the encoding unit 620 is further configured to:
determine a reference line corresponding to the maximum line quantity as a reference line allowed to be used by the current block;
construct a TMRL mode list based on the reference line allowed to be used by the current block and a prediction mode allowed to be used by the current block;
encode a first index,
where a reference line and a prediction mode that are included in a combination indicated by the first index in the TMRL mode list are the reference line used by the current block and the prediction mode used by the current block.

In some embodiments, the encoding unit 620 is specifically configured to:
for each of at least one combination obtained by using the reference line allowed to be used by the current block and the prediction mode allowed to be used by the current block, predict a template of the current block based on a reference line of the combination and by using a prediction mode of the combination, to obtain a prediction cost of each combination;
rank, based on the prediction cost of each combination, the at least one combination in an ascending order of prediction costs, to obtain a ranked combination; and
determine a combination ranked high in the ranked combination as a combination in the TMRL mode list.

In some embodiments, the determining unit 610 is further configured to:
determine, based on whether the current block uses the template-based intra mode derivation TIMD mode, the reference line used by the current block, if the current block does not use the template-based multiple reference line TMRL mode.

In some embodiments, the encoding unit 620 is further configured to:
if the current block uses the TIMD mode, encode a second index; or
if the current block does not use the TIMD mode, encode a third index,
where the second index indicates a reference line used when the current block uses the TIMD mode, and the third index indicates a reference line used when the current block does not use the TIMD mode.

In some embodiments, the encoding unit 620 is specifically configured to:
encode an eighth flag;
where the determining unit 610 is specifically configured to:
   if the eighth flag indicates that the current sequence to which the current block belongs is allowed to use the multiple reference line MRL mode and the current block does not use the TMRL mode, determine, based on whether the current block uses the TIMD mode, the reference line used by the current block.

In some embodiments, the determining unit 610 is further configured to:
if the maximum line quantity is greater than or equal to a second preset threshold, encode the eighth flag.

In some embodiments, the determining unit 610 is further configured to:
if the eighth flag indicates that the current sequence is allowed to use the multiple reference line MRL mode, the maximum line quantity is greater than or equal to a second preset threshold, and the current block does not use the TMRL mode, determine, based on whether the current block uses the TIMD mode, the reference line used by the current block.

It should be understood that the apparatus embodiments may correspond to the method embodiments. For similar descriptions, one may refer to the method embodiments. To avoid repetition, details are not described herein again. Specifically, the decoder 500 shown in FIG. 7 may correspond to a corresponding executing body in the method 300 in embodiments of this application. In addition, the foregoing and other operations and/or functions of the units in the decoder 500 are separately used to implement corresponding procedures in the methods such as the method 300. The encoder 600 shown in FIG. 8 may correspond to a corresponding executing body in the method 400 in embodiments of this application. That is, the foregoing and other operations and/or functions of the units in the encoder 600 are separately used to implement corresponding procedures in the methods such as the method 400.

It should be further understood that the units in the decoder 500 or the encoder 600 in embodiments of this application may be separately or all combined into one or more additional units, or some unit(s) in the encoder 500 or the decoder 600 may be further divided into a plurality of smaller functional units. This can achieve same operations without affecting implementation of the technical effects of embodiments of this application. The foregoing units are obtained through partitioning based on logical functions. In actual application, a function of one unit may also be implemented by a plurality of units, or a function of a plurality of units may be implemented by one unit. In another embodiment of this application, the decoder 500 or encoder 600 may also include other units. In actual application, these functions may also be implemented with assistance of the other units, and may be implemented by a plurality of units cooperatively. According to another embodiment of this application, the decoder 500 or the encoder 600 in embodiments of this application can be constructed and the encoding method or the decoding method in embodiments of this application can be implemented, by running a computer program (including program code) capable of executing the steps in the corresponding method on a general-purpose computing device of a general-purpose computer including processing elements and storage elements such as a central processing unit (CPU), a random access storage medium (RAM), and a read-only storage medium (ROM). The computer program may be recorded on, for example, a computer-readable storage medium, loaded into an electronic device through the computer-readable storage medium, and run therein to implement the corresponding method in embodiments of this application.

In other words, the units mentioned above may be implemented in the form of hardware, may be implemented in the form of software instructions, or may be implemented in the form of a combination of hardware and software. Specifically, the steps in the method embodiments in embodiments of this application may be completed by using an integrated logic circuit of hardware in a processor and/or instructions in a software form. The steps in the methods disclosed with reference to embodiments of this application may be directly performed by a hardware decoding processor, or may be performed by using a combination of hardware in the decoding processor and software. Optionally, the software may be located in a mature storage medium in the art, such as a random access memory, a flash memory, a read-only memory, a programmable read-only memory, an electrically erasable programmable memory, or a register. The storage medium is located in a memory. The processor reads information from the memory, and performs the steps related in the foregoing method embodiments in combination with hardware in the processor.

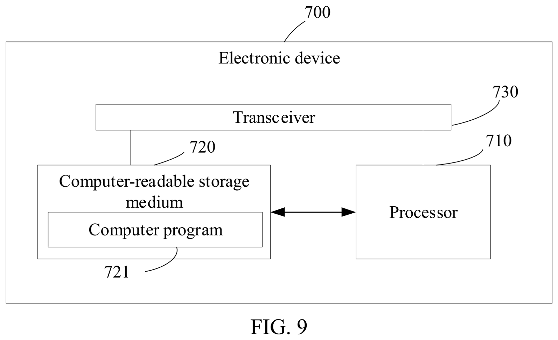

FIG. 9 is a schematic diagram of a structure of an electronic device 700 according to an embodiment of this application.

As shown in FIG. 9, the electronic device 700 includes at least a processor 710 and a computer-readable storage medium 720. The processor 710 and the computer-readable storage medium 720 may be connected via a bus or in another manner. The computer-readable storage medium 720 is configured to store a computer program 721. The computer program 721 includes computer instructions. The processor 710 is configured to execute the computer instructions stored in the computer-readable storage medium 720. The processor 710 is a computing core and control core of the electronic device 700, and is adapted to implement one or more computer instructions, and specifically adapted to load and execute one or more computer instructions to implement corresponding method procedures or corresponding functions.

Exemplarily, the processor 710 may also be referred to as a central processing unit (Central Processing Unit, CPU). The processor 710 may include, but is not limited to: a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a transistor logic device, or a discrete hardware component.

Exemplarily, the computer-readable storage medium 720 may be a high-speed RAM memory, or may be a non-volatile memory (Non-Volatile Memory), for example, at least one magnetic disk memory; and optionally, may be at least one computer-readable storage medium that is located far away from the foregoing processor 710. Specifically, the computer-readable storage medium 720 includes, but is not limited to: a volatile memory and/or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example rather than limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

Exemplarily, the electronic device 700 may be an encoder or encoding framework related in embodiments of this application; a first computer instruction is stored in the computer-readable storage medium 720; and the processor 710 loads and executes the first computer instruction stored in the computer-readable storage medium 720 to implement corresponding steps in the encoding method provided in embodiments of this application. In other words, the first computer instruction in the computer-readable storage medium 720 is loaded by the processor 710 and the corresponding steps are executed. To avoid repetition, details are not described herein.

Exemplarily, the electronic device 700 may be a decoder or decoding framework related in embodiments of this application; a second computer instruction is stored in the computer-readable storage medium 720; and the processor 710 loads and executes the second computer instruction stored in the computer-readable storage medium 720 to implement corresponding steps in the decoding method provided in embodiments of this application. In other words, the second computer instruction in the computer-readable storage medium 720 is loaded by the processor 710 and the corresponding steps are executed. To avoid repetition, details are not described herein.

According to another aspect of this application, this application further provides an encoding and decoding system, including the encoder and the decoder mentioned above.

According to another aspect of this application, this application further provides a computer-readable storage medium (Memory), where the computer-readable storage medium is a memory device in the electronic device 700 and configured to store programs and data, for example, a computer-readable storage medium 720. It may be understood that the computer-readable storage medium 720 herein may include both a built-in storage medium in the electronic device 700 and an extended storage medium supported by the electronic device 700. The computer-readable storage medium provides storage space in which an operating system of the electronic device 700 is stored. In addition, one or more computer instructions suitable for being loaded and executed by the processor 710 are also stored in the storage space. These computer instructions may be one or more computer programs 721 (including program code).

According to another aspect of this application, this application further provides a computer program product or a computer program, where the computer program product or the computer program includes computer instructions, stored in a computer-readable storage medium, and is, for example, a computer program 721. In this case, the data processing device 700 may be a computer, the processor 710 reads the computer instructions from a computer-readable storage medium 720, and the processor 710 executes the computer instructions, so that the computer executes the encoding method or decoding method provided in various optional manners mentioned above.

In other words, when software is used to implement embodiments, the foregoing embodiments may be implemented completely or partially in a form of a computer program product. The computer program product includes one or more computer instructions. When the computer program instructions are loaded and executed on the computer, procedures of embodiments of this application are run in whole or in part or functions of embodiments of this application are achieved. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) manner or a wireless (for example, infrared, wireless, and microwave) manner.

A person of ordinary skill in the art may be aware that, in combination with the examples described in embodiments disclosed in this specification, units and procedure steps may be implemented by electronic hardware or a combination of computer software and electronic hardware. Whether the functions are performed by hardware or software depends on particular applications and design constraints of the technical solutions. A person skilled in the art may use different methods to implement the described functions for each specific application, but it should not be considered that the implementation goes beyond the scope of this application.

Finally, it should be noted that the foregoing content is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A decoding method, comprising:
determining a maximum line quantity of reference lines allowed to be used by a current block;
determining, based on the maximum line quantity, whether the current block uses a template-based multiple reference line TMRL mode;
if the current block uses the TMRL mode, determining a reference line used by the current block and a prediction mode used by the current block; and
performing prediction on the current block based on the reference line used by the current block and by using the prediction mode used by the current block, to obtain a prediction block.

2. The method according to claim 1, wherein the determining the maximum line quantity of reference lines allowed to be used by the current block comprises:
obtaining a first flag,
wherein a value of the first flag being a first value indicates that a current sequence to which the current block belongs does not use a multiple reference line MRL mode; or the value of the first flag being a second value other than the first value indicates that the current sequence uses the MRL mode and indicates the maximum line quantity.

3. The method according to claim 1, wherein the determining the maximum line quantity of reference lines allowed to be used by the current block comprises:
obtaining a second flag; and
determining a line quantity indicated by the second flag as the maximum line quantity.

4. The method according to any one of claims 1 to 3, wherein the determining, based on the maximum line quantity, whether the current block uses the template-based multiple reference line TMRL mode comprises:
if the maximum line quantity is greater than a first preset threshold, obtaining a third flag;
and
if the third flag indicates that the current sequence to which the current block belongs is allowed to use the TMRL mode, obtaining a fourth flag,
wherein the fourth flag indicates whether the current block uses the TMRL mode.

5. The method according to claim 4, wherein the obtaining the fourth flag comprises:
if the third flag indicates that the current sequence is allowed to use the TMRL mode and the current block does not use a template-based intra mode derivation TIMD mode, obtaining the fourth flag.

6. The method according to any one of claims 1 to 3, wherein the determining, based on the maximum line quantity, whether the current block uses the template-based multiple reference line TMRL mode comprises:
obtaining a third flag; and
if the third flag indicates that the current sequence to which the current block belongs is allowed to use the TMRL mode and the maximum line quantity is greater than a first preset threshold, obtaining a fourth flag,
wherein the fourth flag indicates whether the current block uses the TMRL mode.

7. The method according to claim 6, wherein the obtaining the fourth flag comprises:
if the third flag indicates that the current sequence is allowed to use the TMRL mode, the maximum line quantity is greater than the first preset threshold, and the current block does not use a template-based intra mode derivation TIMD mode, determining that the current block uses the TMRL mode.

8. The method according to any one of claims 4 to 7, wherein the obtaining the third flag comprises:
if the current sequence is allowed to use the multiple reference line MRL mode, obtaining the third flag.

9. The method according to any one of claims 4 to 7, wherein the obtaining the third flag comprises:
obtaining a fifth flag; and
if the fifth flag indicates that a value of the third flag is not restricted or the fifth flag does not restrict a value of a flag used for indicating whether the current sequence is allowed to use the multiple reference line MRL mode, obtaining the third flag.

10. The method according to any one of claims 4 to 9, wherein the obtaining the third flag comprises:
obtaining a sixth flag; and
if the sixth flag indicates that the current sequence is allowed to use a template-based mode, obtaining the third flag.

11. The method according to claim 10, wherein the obtaining the sixth flag comprises:
obtaining a seventh flag; and
if the seventh flag indicates that a value of the sixth flag is not restricted, obtaining the sixth flag.

12. The method according to any one of claims 1 to 11, wherein the determining the reference line used by the current block and the prediction mode used by the current block comprises:
determining a reference line corresponding to the maximum line quantity as a reference line allowed to be used by the current block;
constructing a TMRL mode list based on the reference line allowed to be used by the current block and a prediction mode allowed to be used by the current block;
obtaining a first index; and
determining a reference line and a prediction mode that are comprised in a combination indicated by the first index in the TMRL mode list, as the reference line used by the current block and the prediction mode used by the current block.

13. The method according to claim 12, wherein the constructing the TMRL mode list based on the reference line allowed to be used by the current block and the prediction mode allowed to be used by the current block comprises:
for each of at least one combination obtained by using the reference line allowed to be used by the current block and the prediction mode allowed to be used by the current block, predicting a template of the current block based on a reference line of the combination and by using a prediction mode of the combination, to obtain a prediction cost of each combination;
ranking, based on the prediction cost of each combination, the at least one combination in an ascending order of the prediction cost, to obtain a ranked combination; and
determining a combination ranked high in the ranked combination as a combination in the TMRL mode list.

14. The method according to any one of claims 1 to 13, wherein the method further comprises:
determining, based on whether the current block uses the template-based intra mode derivation TIMD mode, the reference line used by the current block, if the current block does not use the TMRL mode.

15. The method according to claim 14, wherein the determining, based on whether the current block uses the template-based intra mode derivation TIMD mode, the reference line used by the current block comprises:
if the current block uses the TIMD mode, obtaining a second index; or
if the current block does not use the TIMD mode, obtaining a third index,
wherein the second index indicates a reference line used when the current block uses the TIMD mode, and the third index indicates a reference line used when the current block does not use the TIMD mode.

16. The method according to claim 14 or 15, wherein the determining, based on whether the current block uses the template-based intra mode derivation TIMD mode, the reference line used by the current block if the current block does not use the TMRL mode comprises:
obtaining an eighth flag; and
if the eighth flag indicates that the current sequence to which the current block belongs is allowed to use the multiple reference line MRL mode and the current block does not use the TMRL mode, determining, based on whether the current block uses the TIMD mode, the reference line used by the current block.

17. The method according to claim 16, wherein the obtaining the eighth flag comprises:
if the maximum line quantity is greater than or equal to a second preset threshold, obtaining the eighth flag.

18. The method according to claim 16, wherein the determining, based on whether the current block uses the TIMD mode, the reference line used by the current block comprises:
if the eighth flag indicates that the current sequence is allowed to use the multiple reference line MRL mode, the maximum line quantity is greater than or equal to a second preset threshold, and the current block does not use the TMRL mode, determining, based on whether the current block uses the TIMD mode, the reference line used by the current block.

19. An encoding method, comprising:
determining a maximum line quantity of reference lines allowed to be used by a current block; and
encoding the maximum line quantity.

20. The method according to claim 19, wherein the encoding the maximum line quantity comprises:
encoding a first flag,
wherein a value of the first flag being a first value indicates that a current sequence to which the current block belongs does not use a multiple reference line MRL mode; or the value of the first flag being a second value other than the first value indicates that the current sequence uses the MRL mode and indicates the maximum line quantity.

21. The method according to claim 19, wherein the encoding the maximum line quantity comprises:
encoding a second flag,
wherein the second flag indicates the maximum line quantity.

22. The method according to any one of claims 19 to 21, wherein the method further comprises:
if the maximum line quantity is greater than a first preset threshold, encoding a third flag; and
if the third flag indicates that the current sequence is allowed to use a template-based multiple reference line TMRL mode, encoding a fourth flag,
wherein the fourth flag indicates whether the current block uses the TMRL mode.

23. The method according to claim 22, wherein the encoding the fourth flag comprises:
if the third flag indicates that the current sequence is allowed to use the TMRL mode and the current block does not use a template-based intra mode derivation TIMD mode, encoding the fourth flag.

24. The method according to any one of claims 19 to 21, wherein the method further comprises:
encoding a third flag; and
if the third flag indicates that the current sequence is allowed to use a template-based multiple reference line TMRL mode and the maximum line quantity is greater than a first preset threshold, encoding a fourth flag,
wherein the fourth flag indicates whether the current block uses the TMRL mode.

25. The method according to claim 24, wherein the encoding the fourth flag comprises:
if the third flag indicates that the current sequence is allowed to use the TMRL mode, the maximum line quantity is greater than the first preset threshold, and the current block does not use a template-based intra mode derivation TIMD mode, encoding the fourth flag.

26. The method according to any one of claims 22 to 25, wherein the encoding the third flag comprises:
if the current sequence is allowed to use a multiple reference line MRL mode, encoding the third flag.

27. The method according to any one of claims 22 to 25, wherein the encoding the third flag comprises:
encoding a fifth flag; and
if the fifth flag indicates that a value of the third flag is not restricted or the fifth flag does not restrict a value of a flag used for indicating whether the current sequence is allowed to use a multiple reference line MRL mode, encoding the third flag.

28. The method according to any one of claims 22 to 27, wherein the encoding the third flag comprises:
encoding a sixth flag; and
if the sixth flag indicates that the current sequence is allowed to use a template-based mode, encoding the third flag.

29. The method according to claim 28, wherein the encoding the sixth flag comprises:
encoding a seventh flag; and
if the seventh flag indicates that a value of the sixth flag is not restricted, encoding the sixth flag.

30. The method according to any one of claims 19 to 29, wherein the method further comprises:
determining a reference line corresponding to the maximum line quantity as a reference line allowed to be used by the current block;
constructing a TMRL mode list based on the reference line allowed to be used by the current block and a prediction mode allowed to be used by the current block; and
encoding a first index,
wherein a reference line and a prediction mode that are comprised in a combination indicated by the first index in the TMRL mode list are the reference line used by the current block and the prediction mode used by the current block.

31. The method according to claim 30, wherein the constructing the TMRL mode list based on the reference line allowed to be used by the current block and the prediction mode allowed to be used by the current block comprises:
for each of at least one combination obtained by using the reference line allowed to be used by the current block and the prediction mode allowed to be used by the current block, predicting a template of the current block based on a reference line of the combination and by using a prediction mode of the combination, to obtain a prediction cost of each combination;
ranking, based on the prediction cost of each combination, the at least one combination in an ascending order of the prediction cost, to obtain a ranked combination; and
determining a combination ranked high in the ranked combination as a combination in the TMRL mode list.

32. The method according to any one of claims 19 to 31, wherein the method further comprises:
determining, based on whether the current block uses the template-based intra mode derivation TIMD mode, the reference line used by the current block, if the current block does not use the template-based multiple reference line TMRL mode.

33. The method according to claim 32, wherein the method further comprises:
if the current block uses the TIMD mode, encoding a second index; or
if the current block does not use the TIMD mode, encoding a third index,
wherein the second index indicates a reference line used when the current block uses the TIMD mode, and the third index indicates a reference line used when the current block does not use the TIMD mode.

34. The method according to claim 32 or 33, wherein the determining, based on whether the current block uses the template-based intra mode derivation TIMD mode, the reference line used by the current block if the current block does not use the TMRL mode comprises:
encoding an eighth flag; and
if the eighth flag indicates that the current sequence to which the current block belongs is allowed to use the multiple reference line MRL mode and the current block does not use the TMRL mode, determining, based on whether the current block uses the TIMD mode, the reference line used by the current block.

35. The method according to claim 34, wherein the encoding the eighth flag comprises:
if the maximum line quantity is greater than or equal to a second preset threshold, encoding the eighth flag.

36. The method according to claim 34, wherein the determining, based on whether the current block uses the TIMD mode, the reference line used by the current block comprises:
if the eighth flag indicates that the current sequence is allowed to use the multiple reference line MRL mode, the maximum line quantity is greater than or equal to a second preset threshold, and the current block does not use the TMRL mode, determining, based on whether the current block uses the TIMD mode, the reference line used by the current block.

37. A decoder, comprising:
a first determining unit, configured to determine a maximum line quantity of reference lines allowed to be used by a current block;
a second determining unit, configured to determine, based on the maximum line quantity, whether the current block uses a template-based multiple reference line TMRL mode;
a third determining unit, configured to: if the current block uses the TMRL mode, determine a reference line used by the current block and a prediction mode used by the current block; and
a prediction unit, configured to perform prediction on the current block based on the reference line used by the current block and by using the prediction mode used by the current block, to obtain a prediction block.

38. An encoder, comprising:
a determining unit, configured to determine a maximum line quantity of reference lines allowed to be used by a current block; and
an encoding unit, configured to encode the maximum line quantity.

39. An electronic device, comprising:
a processor, adapted to execute a computer program; and
a computer-readable storage medium, wherein the computer-readable storage medium stores a computer program, and when the computer program is executed by the processor, the method according to any one of claims 1 to 18 or the method according to any one of claims 19 to 36 is implemented.

40. A computer-readable storage medium, configured to store a computer program, wherein when the computer program is run on a computer, the computer is enabled to execute the method according to any one of claims 1 to 18 or the method according to any one of claims 19 to 36.

41. A computer program product, comprising a computer program/instructions, wherein when the computer program/instructions are executed by a processor, the method according to any one of claims 1 to 18 or the method according to any one of claims 19 to 36 is implemented.

42. A bitstream, wherein the bitstream is a bitstream generated by the method according to any one of claims 1 to 18 or the method according to any one of claims 19 to 36.
